# EUROPEAN PATENT APPLICATION

(11) **EP 4 564 988 A1**
(43) Date of publication of application: **04.06.2025**
(21) Application number: 23846990.2
(22) Date of filing: 26.07.2023
(51) Int. Cl.: H04W 76/11, H04W 76/15, H04W 24/02, H04L 43/0852, G06N 20/00

(54) **COMMUNICATION RELATED TO REDUNDANT PDU SESSION**

(30) Priority: 29.07.2022 US 202263393246 P
(71) Applicant: LG Electronics Inc., Yeongdeungpo-gu Seoul 07336 (KR)
(72) Inventor: KIM, Seokjung, Seoul 06772 (KR); KIM, Laeyoung, Seoul 06772 (KR); YOUN, Myungjune, Seoul 06772 (KR); BYUN, Daewook, Seoul 06772 (KR)
(74) Representative: Mooser, Sebastian Thomas
(86) International application number: PCT/KR2023/010817
(87) International publication number: WO 2024/025332

(57) **Abstract**

One disclosure of the present specification provides a method by which an NG-RAN performs communication. The method may comprise the steps of: receiving a PDU session establishment request message from UE; transmitting the PDU session establishment request message to an SMF; receiving, from the SMF, a PDU session resource configuration request message including a requested RSN and PDU session pair ID; on the basis of an AI/ML model, determining a target node and RSN for a PDU session related to redundant transmission; and allocating an UP path on the basis of the determined RSN value and the PDU session pair ID.

## Description

### TECHNICAL FIELD

The present specification relates to a mobile communication.

### BACKGROUND ART

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

A plurality of PDU sessions are being discussed to support redundant delivery. However, the prior art has a problem that it is impossible establish disjoint User Plane (UP) paths for the plurality of PDU sessions.

### DISCLOSURE

### TECHNICAL SOLUTION

In one aspect, a method for an NG-RAN to perform a communication is provided. The method may include: receiving a PDU session establishment request message from a UE; transmitting the PDU session establishment request message to an SMF; receiving a PDU session resource establishment request message from the SMF comprising a requested RSN, a PDU session pair ID; determining a target node and an RSN for a PDU session involving redundant transmission, based on an AI/ML model; and allocating a UP path, based on the determined RSN value and the PDU session pair ID.

In another aspect, an apparatus implementing the method is provided.

In one aspect, a method of performing a communication by a UE is provided. The method may include: transmitting a PDU session establishment request message to a NG-RAN to request establishment of a PDU session for redundant transmission; and receiving from the NG-RAN a PDU session establishment accept message comprising resource information established for the PDU session.

In another aspect, an apparatus implementing the method is provided.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example of 5G system architecture to which implementations of the present disclosure is applied.
FIGS. 5 and 6 show an example of a PDU session establishment procedure to which implementations of the present disclosure is applied.
FIG. 7 illustrates an example of an end-to-end redundant user plane path.
FIG. 8 illustrates an example of establishing a PDU session for redundant transmission on one NG-RAN, according to one embodiment of the present disclosure.
FIG. 9 illustrates an example of establishing a PDU session for redundant transmission on two NG-RANs, according to one embodiment of the present disclosure.
FIG. 10 illustrates a procedure according to a first example of the disclosure.
FIG. 11 illustrates an example of an object performing AI/ML modeling-related operations, according to one embodiment of the disclosure.
FIG. 12 illustrates a procedure according to a second example of the disclosure.
FIG. 13 illustrates a procedure according to a third example of the disclosure.
FIG. 14 illustrates a procedure according to a fourth example of the disclosure.
FIG. 15 illustrates a procedure according to a fifth example of the present disclosure.
FIG. 16 illustrates a procedure according to a sixth example of the present disclosure.
FIG. 17 illustrates a procedure according to the seventh example of the present disclosure.
FIG. 18 illustrates a procedure according to the eighth example of the opening of the present specification.
FIG. 19 illustrates a procedure according to the ninth example of the opening of this specification.
FIG. 20 illustrates an example of a procedure according to one embodiment of the disclosure.

### MODE FOR INVENTION

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMA may be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, Band C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

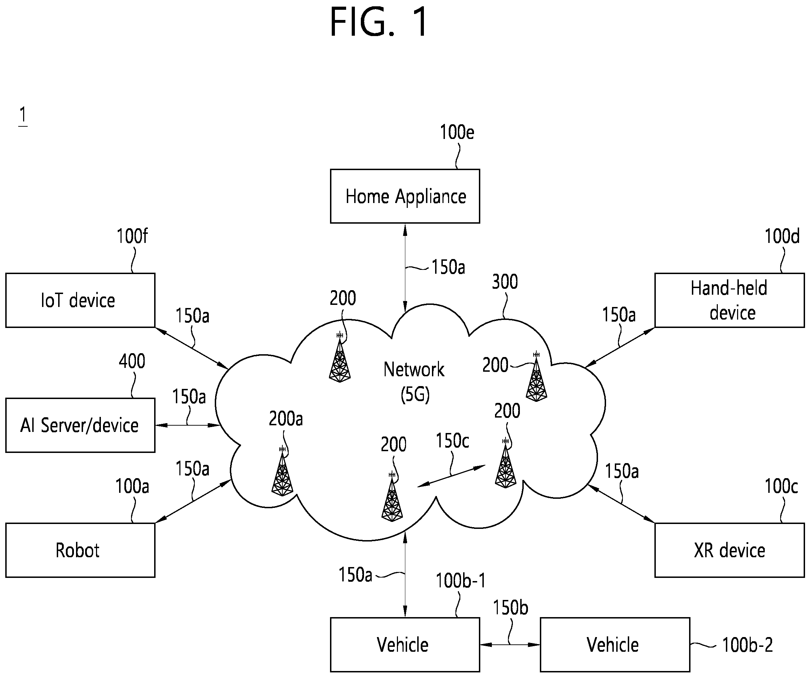

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/5G devices. The wireless devices 100a to 100f may include, without being limited to, a robot 100a, vehicles 100b-1 and 100b-2, an eXtended Reality (XR) device 100c, a hand-held device 100d, a home appliance 100e, an Internet-of-Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the-mentioned names. Additionally and/or alternatively, the radio communication technologies implemented in the wireless devices in the present disclosure may include at least one of ZigBee, Bluetooth, and/or LPWAN which take into account low-power communication, and may not be limited to the-mentioned names. For example, ZigBee technology may generate Personal Area Networks (PANs) associated with small/low-power digital communication based on various specifications such as IEEE 802.15.4 and may be called various names.

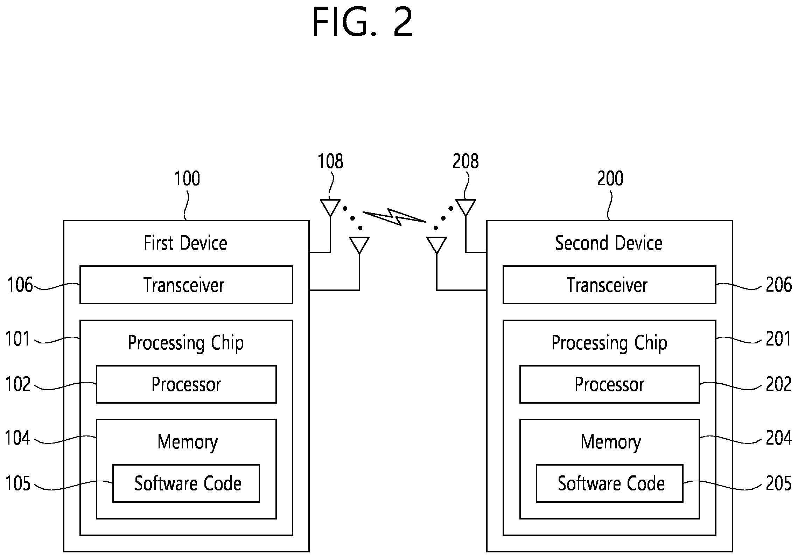

FIG. 2 shows an example of wireless devices to which implementations of the present disclosure is applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

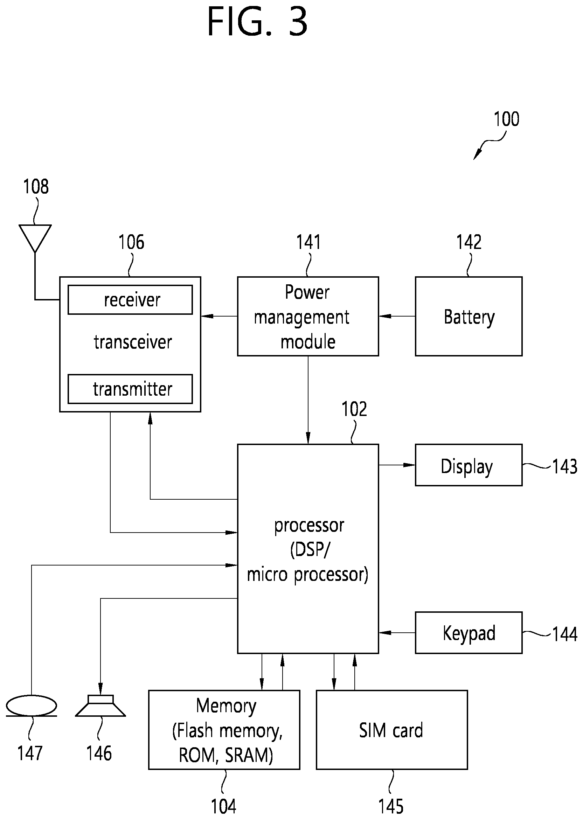

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information related to many SIM cards.

The speaker 146 outputs sound-related results processed by the processor 102. The microphone 147 receives sound-related inputs to be used by the processor 102.

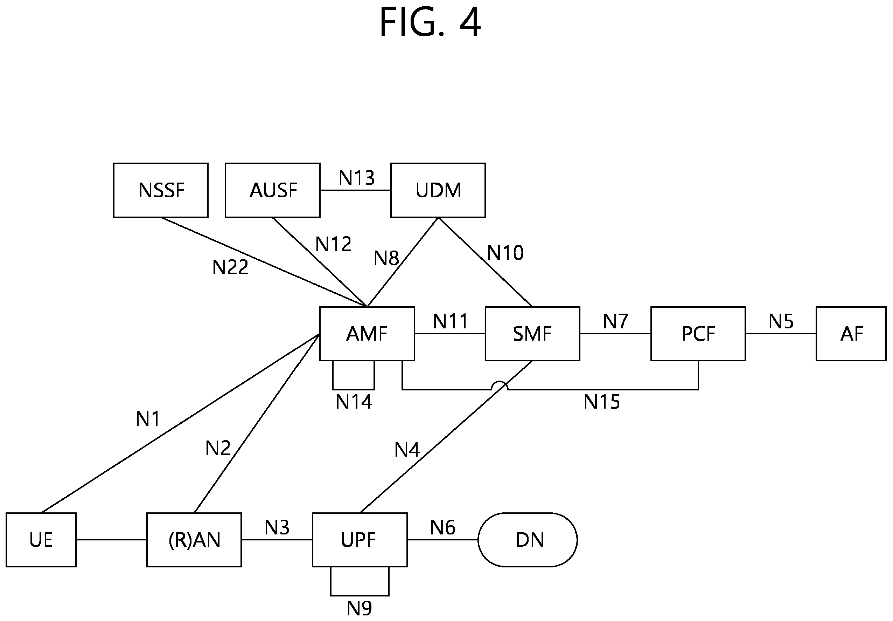

FIG. 4 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)
- Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

PDU session establishment procedure is described. Section 4.3.2 of 3GPP TS 23.502 V16.3.0 (2019-12) can be referenced.

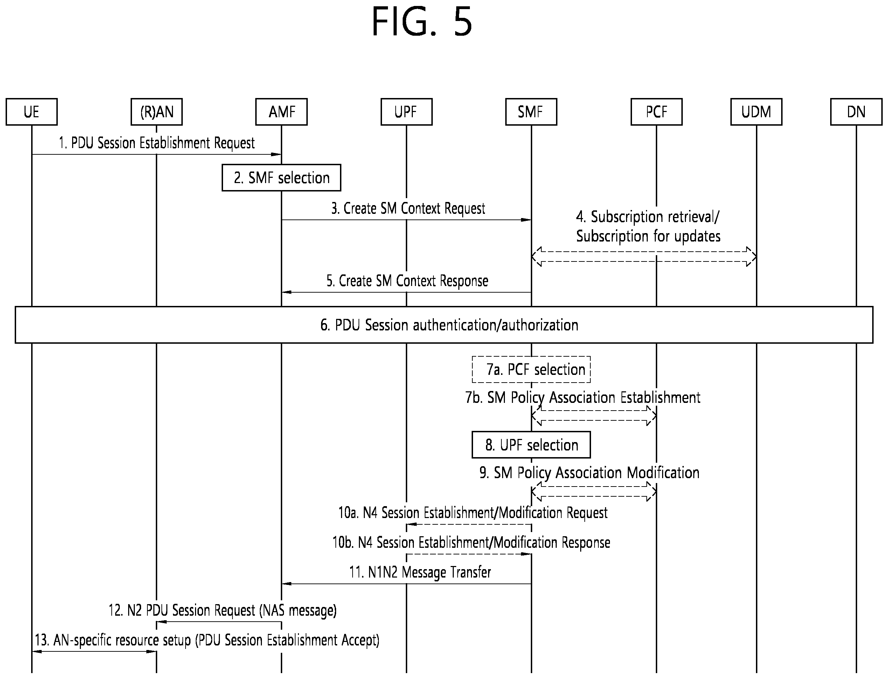

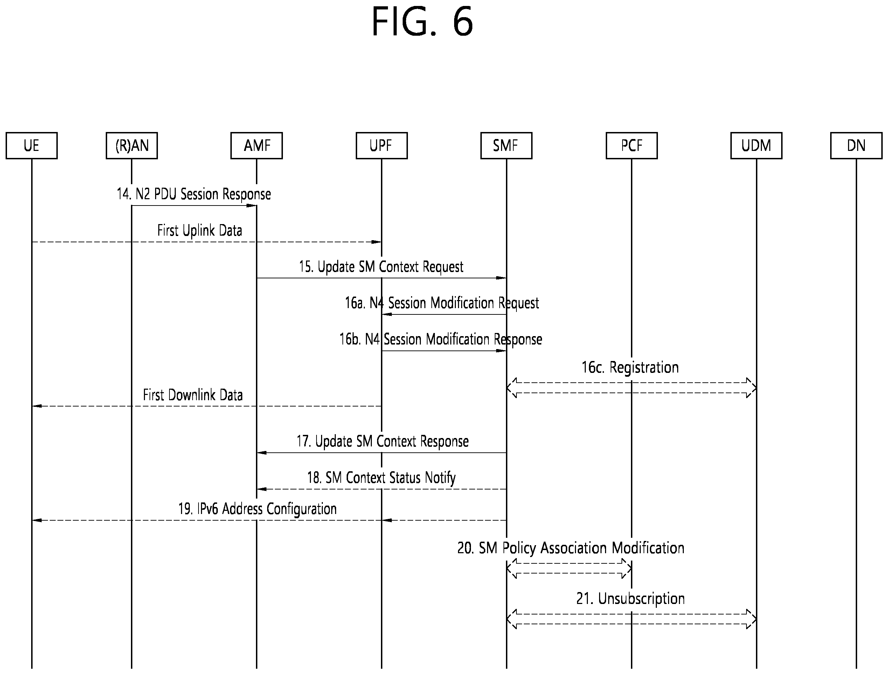

### FIGS. 5 and 6 show an example of a PDU session establishment procedure to which implementations of the present disclosure is applied.

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session associated with multiple access types is referred to as multi access PDU (MA PDU) session and it may be requested by access traffic steering, switching, splitting (ATSSS)-capable UEs.

FIGS. 5 and 6 specify the procedures for establishing PDU sessions associated with a single access type at a given time.

The procedure shown in FIGS. 5 and 6 assumes that the UE has already registered on the AMF thus unless the UE is emergency registered the AMF has already retrieved the user subscription data from the UDM.

First, procedures of FIG. 5 are described.
(1) Step 1: In order to establish a new PDU session, the UE generates a new PDU session ID.

The UE initiates the UE requested PDU session establishment procedure by the transmission of a NAS message including a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a different AMF, the AMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also included in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, then if the serving PLMN S-NSSAI of the PDU session is present in the Allowed NSSAI of the target access type, the PDU session establishment procedure can be performed in the following cases:
- the SMF ID corresponding to the PDU session ID and the AMF belong to the same PLMN,
- the SMF ID corresponding to the PDU session ID belongs to the HPLMN;

Otherwise the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container including the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept to establish a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information related to the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required(or Mandatory)", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message including the PDU Session Establishment Reject message to the UE. In this case, steps 12-17 are skipped.

(12) Step 12: The AMF sends the NAS message including PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 6, which follow the procedures of FIG. 5, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

An example of a redundant transmission is described.

As an example of higher layer multi-connectivity, redundant transmission may be used. Redundant transmission may be applied to the user plane path between the UE and the network for URLLC services.

Describes an example of a redundant user plane path based on dual connectivity.

The UE may initiate two redundant PDU sessions over the 5G network. The 5GS may set the user plane paths of the two redundant PDU sessions to be separated. Upon initiation of PDU session establishment or PDU session modification, the RAN may ensure separated user plane paths by establishing redundant connections on one NG-RAN node or two NG-RAN nodes for the two redundant PDU sessions, depending on the redundancy information received from the 5GC. The RAN needs to ensure that the resources of the data radio bearer for the two redundant PDU sessions are isolated. If the RAN is unable to meet the separate user plane requirements, the redundant PDU sessions may or may not be maintained depending on the RAN local configuration. In case of handover, redundancy information is sent to the target NG-RAN node.

For high-reliability communication, redundant transmissions may be used. Describes an end-to-end redundant user plane path based on dual connectivity.

To support high reliability URLLC services, the UE may establish two redundant PDU sessions over the 5G network. The 5GS can ensure that the user plane paths of the two redundant PDU sessions are separated. The user's subscription indicates whether the redundant PDU session is allowed for the user, and this indication is provided in the UDM to SMF.

NOTE: The following redundant network deployment aspects are subject to operator implementation:
- The core network UPF deployment is aligned with the RAN deployment and supports redundant user plane paths.
- In addition, the physical network topology and geographic distribution of functions support redundant user plane paths to the extent deemed necessary by the operator.
- The operation of redundant user plane paths is sufficiently independent to the extent deemed necessary by the operator (e.g., independent power supplies).

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

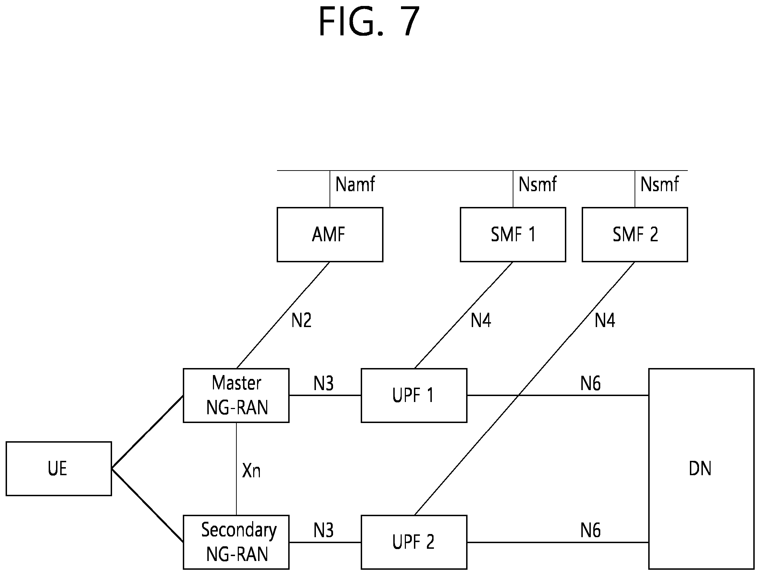

FIG. 7 illustrates an example of an end-to-end redundant user plane path.

FIG. 7 shows an example of a user plane resource setup for a dual PDU session with redundancy applied. One PDU session spans UPF1, which acts as a PDU session anchor at the UE over the master NG-RAN, and the other PDU session spans UPF2, which acts as a PDU session anchor at the UE over the secondary NG-RAN. The NG-RAN can implement redundant user plane resources for two PDU sessions using two NG-RAN nodes (e.g., the master NG-RAN and secondary NG-RAN shown in Figure 7) or a single NG-RAN node. In either case, there is a single N1 interface facing the AMF.

Based on these two PDU sessions, two independent user plane paths are established. Although traffic through UPF1 and UPF2 can be routed through different user plane nodes within the DN, UPF1 and UPF2 are connected to the same Data Network (DN).

Support for redundant PDU sessions may include the following examples
- The UE may initiate two redundant PDU sessions and provide a PDU session pair ID (optional) and an RSN (optional). Within a given redundant PDU session pair, different combinations of RSN, DNN and S-NSSAI are used for each PDU session. Between different pairs of redundant PDU sessions, different combinations of PDU session pair ID, DNN, and S-NSSAI are used.
- The UE may include the PDU session pair ID and/or RSN in each PDU session establishment request when establishing redundant PDU sessions. The UE may determine the PDU session pair ID and/or RSN according to the UE local mechanism or the matching URSP rules.
- The SMF determines whether to treat the PDU session as redundant. This determination is performed based on whether the PDU session pair ID and/or RSN is present in the PDU session establishment request. Or, if dynamic PCC is applied to the PDU session, this determination is performed based on the indication that a redundant PDU session is required provided by the PCF for the PDU session. Or, if dynamic PCC is not used for the PDU session, this determination is performed by the SMF based on a combination of S-NSSAI, DNN, user subscription, and local policy configuration. If the PDU session must be treated as redundant and the PDU session pair ID is not included in the PDU session establishment request, the SMF may use S-NSSAI, DNN, and local settings to determine the PDU session pair ID. If the PDU session needs to be handled redundantly and the RSN is not included in the PDU session establishment request, the SMF may use S-NSSAI, DNN, and local configuration to determine the RSN value. The RSN distinguishes the PDU session to be handled redundantly and indicates the redundant user plane requirements for the PDU session in the NG-RAN.
- The SMF may provide the RSN and PDU session pair ID to the NG-RAN for redundant PDU sessions.
- The carrier setting in UPF selection can ensure proper UPF selection for disjoint paths.
- When a PDU session is established or when the UE transitions to the CM-CONNECTED state, the RSN parameter informs the NG-RAN that redundant user plane resources should be provided for a given PDU session via redundant connections. The PDU session pair ID identifies two redundant PDU sessions that belong together. The value of the RSN parameter and the PDU Session Pair ID indicates the redundant user plane requirement for the PDU session. The request for such redundant handling can be fulfilled by indicating the RSN to the NG-RAN node on a per PDU session basis. PDU sessions related to different RSN values should be realized by different redundant UP resources. Based on the RSN, PDU session pair ID, and RAN settings, the NG-RAN establishes a redundant connection so that the session has an end-to-end redundant path. If there are multiple PDU sessions with RSN parameter set, different RSN values and the same PDU session pair ID, this informs the NG-RAN that the CN is requesting to establish a redundant connection and the user plane may be treated as indicated in the RSN parameter, PDU session pair ID and the associated RAN configuration. If the RSN value and PDU session pair ID are provided to the NG-RAN, the NG-RAN may consider the RSN value and PDU session pair ID when associating the PDU session with the NG-RAN UP.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

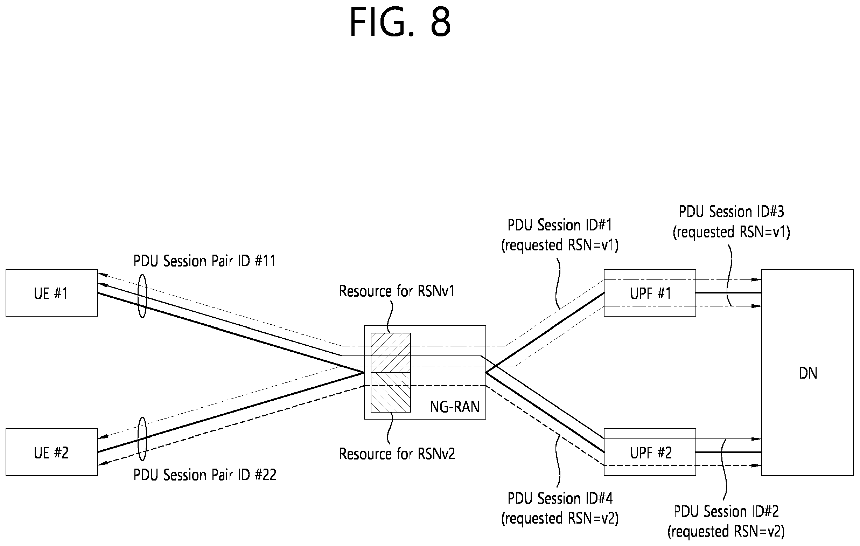

FIG. 8 illustrates an example of establishing a PDU session for redundant transmission on one NG-RAN, according to one embodiment of the present disclosure.

Referring to FIG. 8, an example of PDU sessions being established for PDU session IDs #1 through #4 is shown.

In the example of FIG. 8, a resource for RSNv1 and a resource for RSNv2 in the NG-RAN are shown. For PDU Session ID#1, requested RSN=v1, Used RSN=v1, i.e., the requested RSN is v1 and the used RSN is also set to v1. For PDU Session ID#2, requested RSN=v2, Used RSN=v1. For PDU Session ID#3, requested RSN=v1, Used RSN=v1. For PDU Session ID#4, requested RSN=v2, Used RSN=v2.

For PDU Session ID#2, the SMF may have requested RSN = v2 for PDU Session ID#2. However, due to the load situation of the resource for RSN = v2 or for other reasons, the NG-RAN may decide to assign (or set) RSN = v1 for PDU Session ID#2. Therefore, PDU Session ID#1 and PDU Session ID#2 belonging to PDU Session Pair ID#11 utilize the same resource. This causes the assignment (or setting) of disjoint UP paths to fail for PDU Session Pair ID#11.

On the other hand, for PDU Session ID#3 and PDU Session ID#4 included in PDU Session Pair ID#22, even within the same NG-RAN, the disjoint UP paths allocation (or establishment) can be successful because they utilize different resources (e.g., one for RSN v1, one for RSN v2).

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

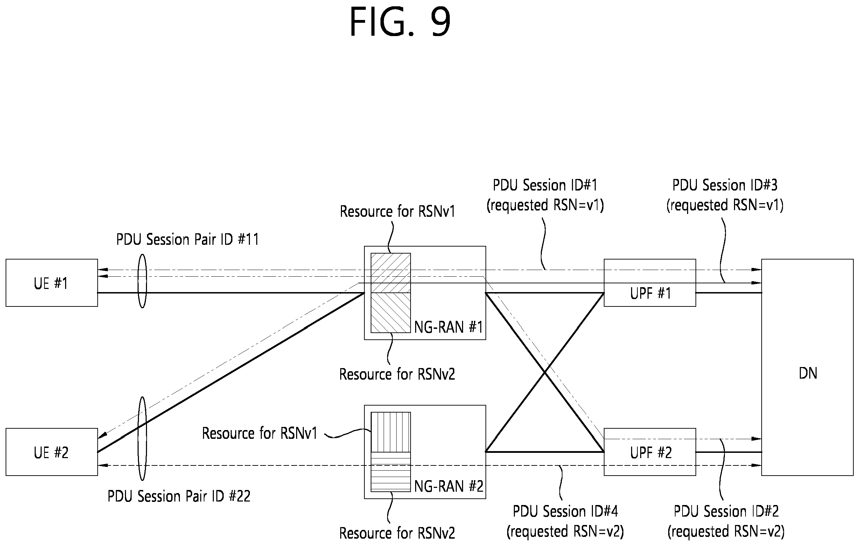

FIG. 9 illustrates an example of establishing a PDU session for redundant transmission on two NG-RANs, according to one embodiment of the present disclosure.

Referring to the example of FIG. 9, an example is shown where PDU sessions are established for PDU session IDs #1 through #4 on two NG-RANs (e.g., NG-RAN #1 and #2).

In the example of FIG. 9, resources for RSNv1 and resources for RSNv2 in NG-RAN#1 are shown. Also, resources for RSNv1 and resources for RSNv2 in NG-RAN#2 are shown. For PDU Session ID#1, requested RSN=v1, Used RSN=v1. For example, the requested RSN was v1 and the used RSN was also set to v1. For PDU Session ID#2, requested RSN=v2, Used RSN=v1. For PDU Session ID#3, requested RSN=v1, Used RSN=v1. For PDU Session ID#4, requested RSN=v2, Used RSN=v2.

PDU Session Pair ID#11 failed to assign/set Disjoint UP paths. Unlike PDU Session Pair ID#11, PDU Session ID#3 and PDU Session ID#4 included in PDU Session Pair ID#22 can utilize resources from different NG-RANs, so the disjoint UP paths allocation/configuration succeeded.

Redundant transmission based on dual connectivity needs to be supported. For example, it may be discussed to include the PDU Session Pair ID in the PDU Session Establishment Request message in order for the terminal to create a PDU Session for redundant transmission.

The UE may have knowledge of the PDU session pair information for redundant PDU sessions. In this case, the UE may provide the PDU session pair information to the SMF, so that the SMF can provide this information to the NG-RAN. By providing this information to the NG-RAN, the SMF may ultimately use this information for SN selection or gNB CU/DU selection. This way, two PDU sessions can be established independently without any constraints on the selected SMF.

If the UE releases one of the redundant PDU sessions and establishes a third PDU session, the PDU session pair information may be used for coordination with the newly established PDU session.

It also needs to be clarified how the UE obtains PDU session pair information for redundant PDU sessions.

NG-RAN can now receive RSN and PDU Session Pair ID values from SMF for PDU Session for redundant transmission. However, there is still a problem that NG-RAN may fail to allocate/set Disjoint UP Path for two PDU Sessions for redundant transmission.

To address this problem, the NG-RAN may effectively and/or accurately assign/set RSN values for PDU Sessions for redundant transmission, and the NG-RAN may transmit the RSN values to the SMF. In various embodiments of the disclosure, the NG-RAN may determine, based on an Artificial Intelligence/Machine Learning (AI/ML) model, an RSN statistical/predictive value that can be assigned/set for a PDU Session of a particular DNN and S-NSSAI combination. Based on the determined RSN statistics/predicted values, the NG-RAN may assign a Disjoint UP Path. And the NG-RAN can deliver the result of allocating the Disjoint UP Path to the SMF.

Various examples of the disclosure describe methods for supporting the NG-RAN to create a disjoint UP Path for a PDU Session (hereinafter referred to as a Redundant PDU Session) of a particular DNN and S-NSSAI combination for redundant transmission based on dual connectivity. For example, the behavior of the OAM or NG-RAN to improve and use its own AI/ML model to obtain statistical/predictive values related to the RSN may be described.

The operations described in one embodiment of the disclosure may be applied only when the UE does not provide PDU Session Pair ID and/or RSN information to the SMF. Alternatively, they may apply only when the UE provides the PDU Session Pair ID and/or RSN information in the SMF, or they may apply in both cases.

Service operations between Core NFs are described in various examples throughout this specification. For some of these service operations, new service operations may be defined and used. Also, for some of the NG messages between the AMF and the NG-RAN described below, new NG messages may be defined and used. Also, for some of the RRC messages between the NG-RAN and the terminal described below, new RRC messages may be defined and used.

In the procedures described in the various examples of the disclosure, the order in which the steps are shown in the drawings is illustrative only; accordingly, any of the following steps may be performed simultaneously/parallel or in an alternate order from that shown in the drawings.

The names of indications or parameter information suggested in the various examples of the disclosure are for illustrative purposes only; accordingly, other names may be used for indications or parameter information for the procedures/purposes/methods suggested in the various examples of the disclosure.

For AI/ML related behavior, see 3GPP TR 37.817 V17.0.0 for the same behavior as conventional behavior, and the AI/ML related behavior is discussed in the context of the proposed behavior described in the various examples in the opening of this specification.

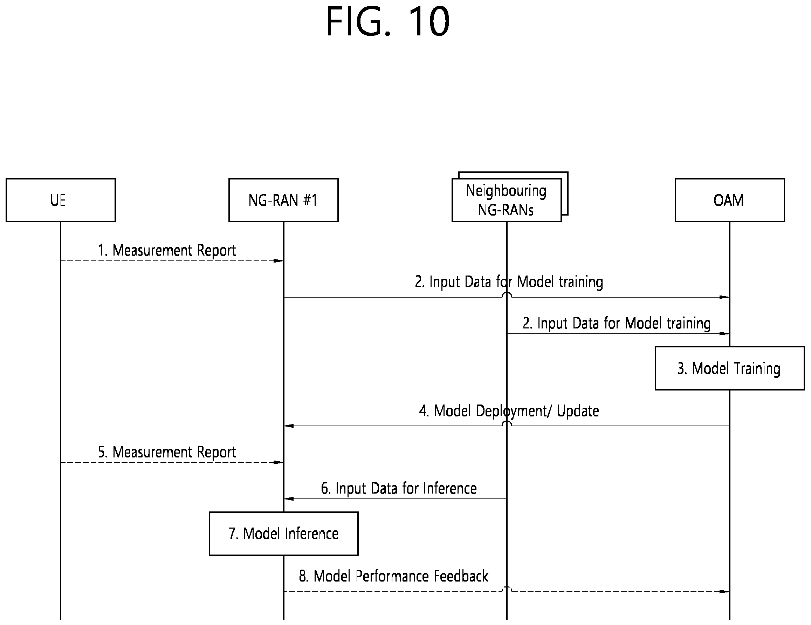

In the following, various examples of operations for predicting target NG-RAN nodes and RSNs based on AI/ML model training are described, with reference to the example of FIG. 10 to FIG. 12.

The example in FIG. 10 shows an example of how AI/ML model training is performed in OAM.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIG. 10 illustrates a procedure according to a first example of the disclosure.

FIG. 10 illustrates an example of a procedure that includes, for example, predicting a target NG-RAN node and predicting an RSN. The example of FIG. 10 includes actions of training an AI/ML model in OAM.

In the example of FIG. 10, NG-RAN #1 may receive a request from the SMF to establish a Redundant PDU Session. Based on the AI/ML model received by NG-RAN #1 from Operations, Administration, and Maintenance (OAM), NG-RAN #1 may predict which node manages (or handle, or serve)the PDU Session. For example, based on the AI/ML model, NG-RAN #1 may select a NG-RAN to be responsible for (or handle, or manage, or serve) the PDU Session from among NG-RAN #1 and NG-RAN #2. For another example, if multiple gNB-DUs exist within NG-RAN #1, NG-RAN #1 may select a gNB-DU to manage (or handle, or serve) the PDU Session based on the AI/ML model. Further, based on the AI/ML model received from the OAM, the NG-RAN #1 may predict the RSN value to be assigned/set for the PDU Session. The NG-RAN #1 may determine or select the RSN in the case of establishing a Redundant PDU Session, modifying a Redundant PDU Session, activating a user plane of a Redundant PDU Session, etc.

Nearby (or neighboring) NG-RANs may also have their own AI/ML models. The surrounding (or neighboring) NG-RANs can send common statistics/predictions based on their AI/ML models to the OAM and NG-RAN #1, respectively.

Step 1: The terminal (e.g., UE) may have received a measurement configuration from NG-RAN #1. In this case, based on the instructions included in that configuration, the terminal may perform the measurement. The terminal may transmit the measurement results to NG-RAN #1. In doing so, the terminal may additionally provide NG-RAN #1 with some or all of the following information For example, the measurement reporting message transmitted by the terminal may additionally include one or more of the following examples of information
- Packet delay for PDU Sessions with specific S-NSSAI and/or PDU Session Pair ID combinations
- Information related to the location/movement of the device (e.g., serving cell ID, mobility status, speed, direction of movement, etc.)

Step 2: NG-RAN #1 and/or neighboring NG-RANs may send input data for training the AI/ML model to the OAM. For example, NG-RAN #1 and/or neighboring NG-RANs may request a new AI/ML model for selecting RSNs and Target NG-RAN Nodes from the OAM, or further request updates to the AI/ML model, and send relevant information (e.g., information related to the AI/ML model, which may include information such as the following examples) to the OAM, respectively. For example, NG-RAN #1 and/or neighboring NG-RANs may transmit some or all of the following examples of information to the OAM. Information such as these examples may be provided to the OAM explicitly, implicitly, implicitly, or in combination. If the NG-RAN requests the OAM to create a new AI/ML model or to update an AI/ML model, the existing input parameters included in the message sent by the NG-RAN can be referenced in TR 37.817 V17.0.0. For example, NG-RAN #1 and/or neighboring NG-RANs may pass some or all of the following information to the OAM, as shown in the following examples
- UE location information (e.g., TAI, Cell ID, NG-RAN ID, etc.).
- Area of Interest (e.g., list of TAIs or Cell IDs or NG-RAN IDs). Information to limit the area of interest.
- Target of Analytics Reporting: a single UE (i.e., an identifier for that terminal (e.g., SUPI, etc.)), or a group of UEs (e.g., an Internal Group ID), or any UE.
- Radio capability information of the terminal for dual connectivity
- Measurement Results received from the terminal in Step 1
- One or more of the following information related to the PDU Session for a specific S-NSSAI and PDU Session Pair ID combination:
- Requested RSN received from the SMF.
- The NG-RAN ID that was actually manages (or handles, or serves) the the PDU Session and the Used RSN assigned/set by the the NG-RAN
- Packet delay and packet drop rate for the PDU Session
- Current information of resource status assigned by RSN for the PDU Session, and prediction/statistic values related to resource status
- QoS information related to the PDU Session

For the combination of S-NSSAI and PDU Session Pair ID, multiple PDU Session Pair ID related information and/or RSN related information may be provided.

NG-RAN may apply AI/ML model to statistically/predict the RSN that each NG-RAN can provide for a PDU session with combination of a specific S-NSSAI and PDU Session Pair ID and the resource status at that time.

Step 2 may begin with the OAM requesting relevant information from NG-RAN #1 and other neighboring NG-RANs in order to update the AI/ML model.

Step 3: Based on the information received in Step 2, the OAM can create a new AI/ML model or update an existing AI/ML model that statistics/predicts the RSN and Target NG-RAN Node.

Step 4: The OAM can transmit the results from Step 3 to NG-RAN #1.

Step 5: Following the instructions included in the measurement configuration sent by NG-RAN #1, the terminal can perform measurements and send the latest measurement results back to NG-RAN #1. The terminal can send a measurement report message to NG-RAN #1. The terminal may additionally send some or all of the following information to NG-RAN #1, as illustrated in the following example:
- Packet delay for PDU Sessions with specific S-NSSAI and/or PDU Session Pair ID combinations
- Information related to the location/movement of the terminal (e.g., serving cell ID, mobility status, speed of movement, direction of movement, etc.)

Step 6: Neighboring NG-RANs can provide information related to statistics/forecasting, so that NG-RAN #1 can proceed with statistics/forecasting related to the RSN. Neighboring NG-RANs may send some or all of the following information to NG-RAN #1:
- The following information regarding a PDU Session with a specific S-NSSAI and PDU Session Pair ID combination:
- The Requested RSN received from the SMF.
- The NG-RAN ID that was actually manages (or handles, or serves) the PDU Session and the Used RSN assigned/set by that NG-RAN
- Packet delay and packet drop rate for the PDU Session
- Current value of resource status and/or predictions/statistics value of resource status allocated by RSN for the PDU Session

Step 7: NG-RAN #1 may perform model inference. For example, based on the AI/ML model received in Step 4 and the information received in Steps 5 and 6, NG-RAN #1 may obtain some or all of the following as statistical/predictive results For example, some or all of the following examples of information may be statistical results or predictive results that NG-RAN #1 obtains based on the AI/ML model:
- A list of candidate NG-RANs that can manage (or handle, or serve) the PDU Session.
- Predictions/statistics values for RSNs to be assigned/set by individual NG-RANs in the list.
- Predictions/statistics values of resource status assigned by RSN for the PDU Session on individual NG-RANs in the list. For example, the predicted value/statistic value of the resource status may be an average value or a peak value or a percentage value, or the like.
- Performance (e.g., predicted values of packet delay and packet drop rate) based on the predictions/statistics. For example, the value related to performance may be an average value or a peak value or a percentage value.
- Confidence and validity time of the prediction/statistic results.
- The area for which the prediction/statistic is valid (e.g., Area of Interest (e.g., list of TAIs or Cell IDs or NG-RAN IDs), etc.)

The statistical/predictive results provided by the AI/ML models received from OAM are not limited to information such as the examples above. The statistics/prediction results provided by the AI/ML model may be information to assist NG-RAN #1 to determine the appropriate Target NG-RAN and RSN values for the Redundant PDU Session.

Based on the statistical results or prediction results that NG-RAN #1 obtains based on the AI/ML model, NG-RAN #1 may initiate a Secondary Node (SN) Addition procedure. For example, an SMF may request resource allocation for a PDU Session with a specific S-NSSAI, PDU Session Pair ID and Requested RSN combination. In this case, NG-RAN #1 may initiate an SN Addition procedure to the NG-RAN for which a Disjoint UP path may be configured for the PDU Session. If NG-RAN #1 determines that NG-RAN #1 can provide two Redundant PDU Sessions within NG-RAN #1 according to the prediction result of AI/ML model, NG-RAN #1 may configure Disjoint UP Path for each PDU Session.

Step 8: If required, NG-RAN #1 can provide feedback to the OAM on AI/ML model performance.

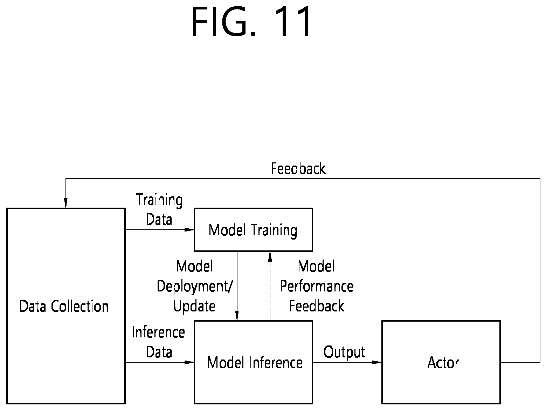

Some or all of the AI/ML modelling related actions performed by the OAM may be performed by other entities/NFs. For this purpose, a new entity/NF may be defined (e.g., RAN-DAF: RAN-Data Analytics Function). Furthermore, the newly defined entity/NF may be separated and defined into multiple entities/NFs depending on the operation/function it performs (e.g., see example in FIG. 11). The same may be applied throughout this specification. In other words, some or all of the AI/ML modelling-related actions described in the various examples of the disclosure may be performed by other entities/NFs.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

### FIG. 11 illustrates an example of an object performing AI/ML modeling-related operations, according to one embodiment of the disclosure.

As described earlier, some or all of the AI/ML modeling related actions may be performed by other entities/NFs. For this purpose, a new entity/NF may be defined (e.g., RAN-DAF: RAN-Data Analytics Function). In addition, the newly defined entity/NF may be separated and defined into multiple entities/NFs according to the actions/functions to be performed. For example, as shown in the example of FIG. 11, multiple entities/NFs such as Data Collection, Model Training, Model Inference, and Actor may be defined. For example, 1) an entity/NF performing Data Collection may provide input data to the Model Training and Model Inference functions. 2) the entity/NF that performs Model Training can perform AI/ML model training, validation, and testing that can generate model performance metrics as part of the model testing procedure. 3) Entities/NFs performing Model Inference can provide AI/ML model inference results (e.g., predictions or decisions). 4) Entities/NFs, which are Actors, can receive the output of model inference functions and trigger or perform corresponding actions.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

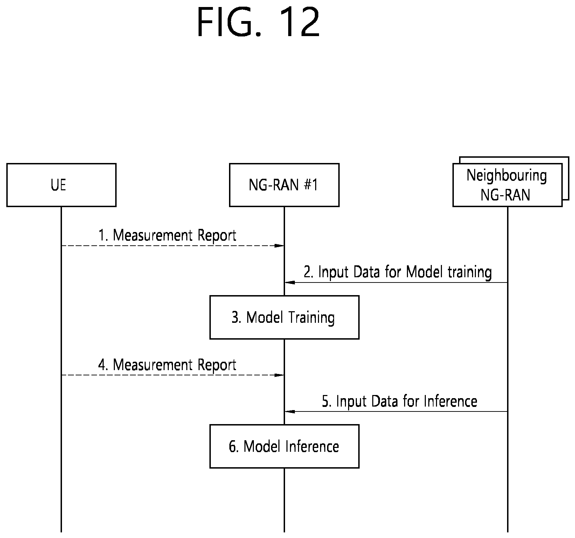

### FIG. 12 illustrates a procedure according to a second example of the disclosure.

FIG. 12 shows an example of a procedure that includes an action to predict the target NG-RAN node and an action to predict the RSN. The example of FIG. 12 includes an example where AI/ML model training is performed in the NG-RAN.

In the example of FIG. 12, NG-RAN #1 may configure its own AI/ML model after receiving a request from SMF to create a Redundant PDU Session. Based on the AI/ML model, NG-RAN #1 may predict which node manages (or handle, or serve)the the PDU Session. For example, based on the AI/ML model, NG-RAN #1 may select a NG-RAN to manage (or handle, or serve) the PDU Session from among NG-RAN #1 and NG-RAN #2. In another example, if there are multiple gNB-DUs within a single NG-RAN, NG-RAN #1 may select a gNB-DU to manage (or handle, or serve) the PDU Session based on the AI/ML model. Furthermore, NG-RAN #1 can predict the RSN value to be assigned/set for the PDU session. The NG-RAN #1 may determine/select the RSN when creating a redundant PDU Session, modifying a redundant PDU Session, activating a user plane of a redundant PDU Session, etc.

The neighboring NG-RANs may have their own AI/ML models, and the neighboring NG-RANs may forward the predicted values obtained based on their AI/ML models to NG-RAN #1.

Step 1: The terminal (e.g., UE) may have received a measurement configuration from NG-RAN #1. In this case, based on the instructions included in that configuration, the terminal may perform the measurement. The terminal may transmit the measurement results to NG-RAN #1. The terminal may additionally provide NG-RAN #1 with some or all of the following information For example, the measurement reporting message transmitted by the terminal may additionally include one or more of the following examples of information
- Packet delay for PDU Sessions with specific S-NSSAI and/or PDU Session Pair ID combinations
- Information related to the location/movement of the terminal (e.g., serving cell ID, mobility status, speed, direction of movement, etc.)

Step 2: Neighboring NG-RANs can send input data for AI/ML model training to NG-RAN #1. To reconfigure NG-RAN #1's AI/ML model for selecting RSNs and Target NG-RAN Nodes, or to perform updates to its AI/ML model, the neighboring NG-RANs may transmit relevant information to NG-RAN #1. Some or all of the following information may be transmitted to NG-RAN #1. This information may be provided explicitly, implicitly, implicitly, or in combination. During new creation or update of AI/ML models located in NG-RAN #1, the existing input parameters used may be referenced in TR 37.817. For example, neighboring NG-RANs may pass some or all of the following information to NG-RAN #1, for example
- One or more of the following information related to the PDU Session for a specific S-NSSAI and PDU Session Pair ID combination:
- The Requested RSN received from the SMF.
- The NG-RAN ID that was actually manages (or handles, or serves) the the PDU Session and the Used RSN assigned/set by that NG-RAN
- Packet delay and packet drop rate for the PDU Session
- Current information of resource status assigned by RSN for the PDU Session, and prediction/statistic values related to resource status
- QoS information related to the PDU Session

For the combination of S-NSSAI and PDU Session Pair ID, multiple PDU Session Pair ID related information and/or RSN related information may be provided.

NG-RAN may apply AI/ML model to statistically/predict the RSN that each NG-RAN can provide for a PDU session with combination of a specific S-NSSAI and PDU Session Pair ID and the resource status at that time.

Step 2 may begin with NG-RAN #1 communicating some or all of the following information to neighboring NG-RANs in order to reconfigure or update the AI/ML model:
- UE location information (e.g., TAI, Cell ID, NG-RAN ID, etc.)
- Area of Interest (e.g., list of TAIs or Cell IDs or NG-RAN IDs) which restricts the area in focus
- Target of Analytics Reporting: a single UE (i.e., an identifier for that terminal (e.g., SUPI, etc.)), or a group of UEs (e.g., an Internal Group ID) or any UE
- The radio capability information of the terminal for dual connectivity.

Step 3: NG-RAN #1 can perform model training. For example, based on the information received in Step 2, NG-RAN #1 may create a new AI/ML model or update an existing AI/ML model to select the RSN and Target NG-RAN Node.

Step 4: Following the instructions included in the measurement configuration sent by NG-RAN #1, the terminal can perform measurements and send the latest measurement results back to NG-RAN #1. The terminal can send a measurement report message to NG-RAN #1. The terminal may additionally transmit some or all of the following information to NG-RAN #1, as illustrated in the following example:
- Packet delay for PDU Sessions with combiation of specific S-NSSAI and/or PDU Session Pair ID
- Information related to the location/movement of the terminal (e.g., serving cell ID, mobility status, speed, direction of movement, etc.)

Step 5: Neighboring NG-RANs can provide information related to statistics/forecasting, so that NG-RAN #1 can proceed with statistics/forecasting related to the RSN. Neighboring NG-RANs may send some or all of the following information to NG-RAN #1, for example:
- The following information regarding a PDU Session with a specific S-NSSAI and PDU Session Pair ID combination:
- The Requested RSN received from the SMF.
- The NG-RAN ID that was actually manages (or handles, or serves) the PDU Session and the Used RSN assigned/set by that NG-RAN
- Packet delay and packet drop rate for the PDU Session
- Current value of resource status and/or predictions/statistics value of resource status allocated by RSN for the PDU Session

Step 6: NG-RAN #1 may perform model inference. For example, based on the AI/ML model obtained in Step 4 and the information received in Steps 4 and 5, NG-RAN #1 may obtain some or all of the following as statistical/predictive results For example, some or all of the following examples of information may be statistical results or predictive results that NG-RAN #1 obtains based on the AI/ML model:
- A list of candidate NG-RANs that can manage (or handle, or serve) the PDU Session.
- Predictions/statistics values for RSNs to be assigned/set by individual NG-RANs in the list.
- Predictions/statistics values of resource status assigned by RSN for the PDU Session on individual NG-RANs in the list. For example, the predicted value/statistic value of the resource status may be an average value or a peak value or a percentage value, or the like.
- Performance (e.g., predicted values of packet delay and packet drop rate) based on the predictions/statistics. For example, the value related to performance may be an average value or a peak value or a percentage value.
- confidence and validity time of the prediction/statistic results.
- The area for which the prediction/statistic is valid (e.g., Area of Interest (e.g., list of TAIs or Cell IDs or NG-RAN IDs), etc.)

The statistical/predictive results provided by the AI/ML model obtained in Step 3 are not limited by the information. The statistical results/prediction results provided by the AI/ML model may be information to assist NG-RAN #1 to determine the appropriate Target NG-RAN and RSN values for the Redundant PDU Session.

Based on the statistical results or prediction results that NG-RAN #1 obtains based on the AI/ML model, NG-RAN #1 may initiate the SN Addition procedure. For example, the SMF may request resource allocation for a PDU Session with a specific S-NSSAI, PDU Session Pair ID and Requested RSN combination. In this case, NG-RAN #1 may initiate SN Addition procedure to NG-RAN for which Disjoint UP path may be configured for the PDU Session. If NG-RAN #1 determines that NG-RAN #1 can provide two Redundant PDU Sessions within NG-RAN #1 according to the prediction result of AI/ML model, NG-RAN #1 configures Disjoint UP Path for each PDU Session.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

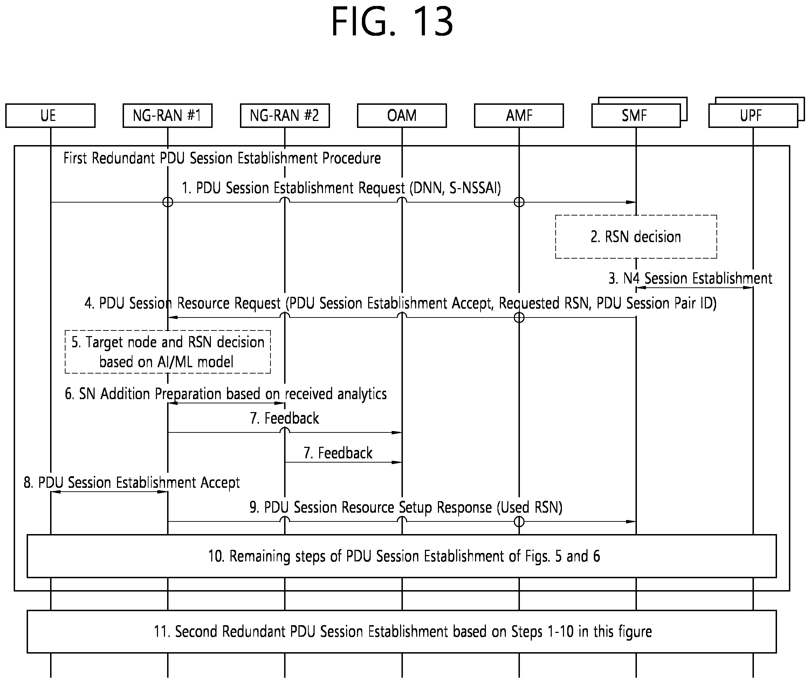

### FIG. 13 illustrates a procedure according to a third example of the disclosure.

FIG. 13 shows an example of an end-to-end redundant PDU session establishment procedure based on analytics of the NG-RAN. In the example of FIG. 13, the OAM may perform AI/ML model training.

FIG. 13 includes an example operation in which NG-RAN #1 allocates/sets the node and RSN to be in charge of the PDU session based on the AI/ML model received from the OAM during the Redundant PDU Session generation (or establishment) process.

The two PDU sessions for Redundant Transmission can be handled by the same SMF or by two different SMFs. The two PDU sessions for Redundant Transmission can be serviced by the same UPF or by two different UPFs.

NG-RAN #2 may also have its own AI/ML model and may pass the predictions obtained from that AI/ML model to OAM and NG-RAN #1.

In order to avoid the situation where NG-RAN and SMF simultaneously calculate RSN statistical values/predicted values using AI/ML model and NWDAF, NG-RAN may inform AMF that it has the capability to statistics/predict RSN values through AI/ML model. The NG-RAN can send the capability information to the AMF through the NG Setup procedure or NG Configuration Update procedure. Alternatively, the NG-RAN may send capability information to the AMF through procedures such as Registration, Service Request, PDU Session Establishment, etc. The AMF may inform the SMF about the capability of RSN statistics/prediction received from the NG-RAN. The AMF may enable or disable the functions related to the AI/ML model (e.g., the function of the NG-RAN to perform statistics and/or predictions related to the RSN based on the AI/ML model) for the NG-RAN with the capability. Alternatively, in order to be transparent to the AMF (e.g., the AMF cannot check the capability information exchanged between the NG-RAN and the SMF), the NG-RAN and the SMF may exchange the capability via N2 SM information.

To avoid a situation where NG-RAN and SMF simultaneously calculate RSN statistics/prediction values using AI/ML model and NWDAF, the following operation may be performed. For example, based on the analytics obtained from NWDAF, the SMF may perform statistics/predictions on RSNs and assign/set RSNs based on them. In this case, the SMF may transmit the RSN to the NG-RAN via the AMF. The capability information that the SMF can perform these actions (e.g., the SMF assigns/establishes RSNs based on the analytics from the NWDAF) may be transmitted to the NG-RAN via the AMF through the NG Setup or NG Configuration Update procedures, or it may be transmitted to the NG-RAN via the AMF in the middle of procedures such as Registration, Service Request, PDU Session Establishment, etc. Alternatively, the NG-RAN and SMF may exchange the capabilities through N2 SM information so that it is transparent to the AMF.

Step 1: The terminal may send a PDU Session Establishment Request message including DNN and S-NSSAI information to the SMF to create a new PDU Session. If the terminal may determine the RSN or PDU Session Pair ID based on local configuration or URSP rules within the terminal, the terminal may include that information (e.g., RSN or PDU Session Pair ID) in the PDU Session Establishment Request message.

Step 2: The SMF may also determine the RSN. For example, in Step 1, the terminal may not have included RSN information in the PDU Session Establishment Request message. In this case, the SMF may determine the RSN value for the PDU Session based on the PDU Session Pair ID included in the PDU Session Establishment Request message (if received from the terminal in Step 1), the DNN and S-NSSAI related to the PDU Session, the local configuration within the SMF, etc. If the terminal has included the RSN information in the PDU Session Establishment Request message in Step 1, the operation of the SMF determining the RSN may be omitted.

In Step 1, the terminal may not have included the PDU Session Pair ID information in the PDU Session Establishment Request message. In this case, the SMF may determine the PDU Session Pair ID value for the the PDU Session based on the DNN and S-NSSAI related to the the PDU Session, the local configuration within the SMF, etc. If the terminal has included the PDU Session Pair ID information in the PDU Session Establishment Request message in Step 1, the operation to determine the PDU Session Pair ID may be omitted.

Step 3: SMF may create an N4 Session for UPF and the PDU Session.

Step 4: The SMF may send a PDU Session Resource Setup Request message to NG-RAN#1. For example, the SMF may send a PDU Session Resource Setup Request to the NG-RAN via AMF to request the NG-RAN to allocate resources for the PDU Session. The PDU Session Resource Setup Request message may also include a NAS message to the terminal, i.e., a PDU Session Establishment Accept message. At this time, the SMF may send a PDU Session Resource Setup Request message to the NG-RAN including the following information:
- The PDU Session Pair ID sent by the terminal in Step 1 or determined by the SMF in Step 2 for the PDU Session.
- The Requested RSN sent by the terminal in Step 1 or determined by the SMF in Step 2 for the PDU Session.

Step 5: For the Redundant PDU Session creation request received from the SMF, NG-RAN #1 may perform the process of predicting the target node that will serve (or manage) the the PDU Session and the RSN value to be assigned/set using the example procedure of FIG. 10. The NG-RAN #1 may select a target node with a high priority to assign/set a disjoint UP path for the PDU Session according to the requested RSN received from the SMF.

NG-RAN #1 may not be able to allocate/establish a Disjoint UP Path based on the Requested RSN. In this case, NG-RAN #1 selects an NG-RAN with an RSN value (other than Requested RSN) (i.e., Used RSN) to which it can assign/establish a Disjoint UP Path as a target node. For example, NG-RAN#1 may select an NG-RAN with an RSN value other than the Request RSN as the USed RSN. In the example of FIG. 13, NG-RAN #1 may select NG-RAN #2 as the target node using the procedure of FIG. 10.

Based on the statistical/predictive results, NG-RAN #1 may decide to serve (or manage) the PDU session by itself. In this case, when NG-RAN #1 is divided into CU and DU, and CU is further divided into CU-CP and CU-UP, NG-RAN #1 may allocate/set resources for CU-UP and DU according to the Requested RSN value. In this case, if NG-RAN #1 is unable to allocate/establish a disjoint UP path based on the Requested RSN, NG-RAN #1 may select an RSN value (other than the Requested RSN) (i.e., the Used RSN) to allocate/establish a disjoint UP path. For example, NG-RAN#1 may select an RSN value other than the Request RSN as the USed RSN.

Alternatively, NG-RAN #1 may not select the RSN value to which the Disjoint UP Path can be assigned for the Redundant PDU Session, but may select the RSN that is predicted to have the best performance (e.g., predicted values of packet delay and packet drop rate) or the best resource status according to the prediction/statistics results. Then, NG-RAN #1 may select a target node that can provide that RSN.

From this perspective, NG-RAN #1 may select NG-RAN #2, as shown in the example in FIG. 13. In this case, NG-RAN #1 may start the SN Addition procedure in Step 6, and may inform NG-RAN #2 that NG-RAN #1 has selected the RSN that is predicted to have the best performance (e.g., predicted values of packet delay and packet drop rate) or the best resource status according to the prediction/statistics results.

Step 5 may be performed before Step 1 is performed or while Steps 1 through 4 are being performed.

Step 6: Based on the PDU Session Pair ID received in Step 4 and the target node and RSN values determined in Step 5, the NG-RAN may assign/set the Disjoint UP path for the PDU Session. In FIG. 13, since NG-RAN #1 has selected NG-RAN #2 as the target node, NG-RAN #1 can start the SN Addition procedure with NG-RAN #2. When NG-RAN #1 starts the SN Addition procedure, NG-RAN #1 can request resource allocation/setup based on the information obtained in Steps 4 and 5. The XnAP SN ADDTION REQUEST message sent by NG-RAN #1 to NG-RAN #2 may include some or all of the following information
- PDU Session Pair ID received in Step 4
- Statistics/prediction results obtained in Step 5
- RSN value related to the PDU Session. For example, it may mean the Requested RSN value received from the SMF in Step 4 or the RSN statistics/prediction value obtained based on the AI/ML model prediction in Step 5.

NG-RAN #1 may decide to manage (or serve, or handle) the PDU Session by itself. In this case, NG-RAN #1 may request the gNB-DUs and gNB-CU-UPs located within NG-RAN #1 to allocate/establish resources for the PDU Session without performing the SN Addition procedure. The request message sent by NG-RAN #1 to the gNB-DUs and gNB-CU-UPs may include some or all of the following information
- PDU Session Pair ID received in Step 4
- Statistics/prediction results obtained in Step 5
- RSN value related to the PDU Session. For example, it can mean the Requested RSN value received from the SMF in Step 4 or the RSN statistics/prediction value obtained based on the AI/ML model prediction in Step 5.

Step 7: NG-RAN #2 transmits feedback to the OAM on the results of Step 6 executed based on the statistical/predictive results generated in Step 5. If NG-RAN #1 manages (or handle, or serve)the PDU Session, the feedback may be performed by NG-RAN #1 instead of NG-RAN #2. The feedback sent by NG-RAN #2 may include some or all of the following information
- UE location information (e.g., TAI, Cell ID, NG-RAN ID, etc.);
- Target of Analytics Reporting: a single UE (i.e., an identifier for that terminal (e.g., SUPI, etc.)), or a group of UEs (e.g., an Internal Group ID), or any UE;
- The following information that occurred after NG-RAN #2 manages (or handles, or serves) a PDU Session with a specific S-NSSAI and PDU Session Pair ID combination that was previously managed (or handled, or served) by NG-RAN #1:
- Requested RSN received from the SMF.
- NG-RAN ID actually selected in Step 5 to manage (or handle, or serve) the PDU Session = NG-RAN #2
- Used RSN value assigned/set by the NG-RAN manages (or handles, or serves) the PDU Session
- Current Packet delay and Packet drop rate for the PDU Session
- Current value of resource status assigned for the PDU Session
- QoS information related to the PDU Session

NG-RAN #1 also provides feedback to the OAM on the results of Step 6, which is executed based on the statistics/predictions generated in Step 5. The feedback sent by NG-RAN #1 may include some or all of the following information
- UE location information (e.g., TAI, Cell ID, NG-RAN ID, etc.);
- Target of Analytics Reporting: a single UE (i.e., an identifier for that terminal (e.g., SUPI, etc.)), or a group of UEs (e.g., an Internal Group ID), or any UE;
- Statistics/forecast results obtained in Step 5;
- the following information related to the PDU Session of a combination of the specific S-NSSAI and PDU Session Pair ID that has not been handed over by NG-RAN #1 to NG-RAN #2 and is still manages (or handles, or serves) NG-RAN #1
- Requested RSN received from the SMF.
- NG-RAN ID actually selected in Step 5 to manage (or handle, or serve) for the PDU Session = NG-RAN #1
- Used RSN value assigned/set by the NG-RAN manages (or handles, or serves) the PDU Session
- Current Packet delay and Packet drop rate for the PDU Session
- Current value of resource status assigned for the PDU Session
- QoS information related to the PDU Session

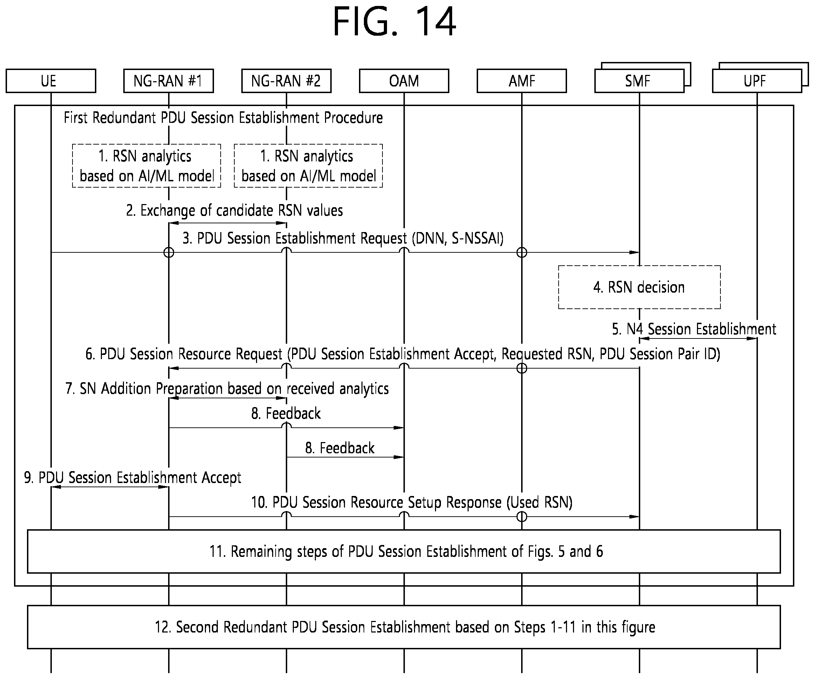

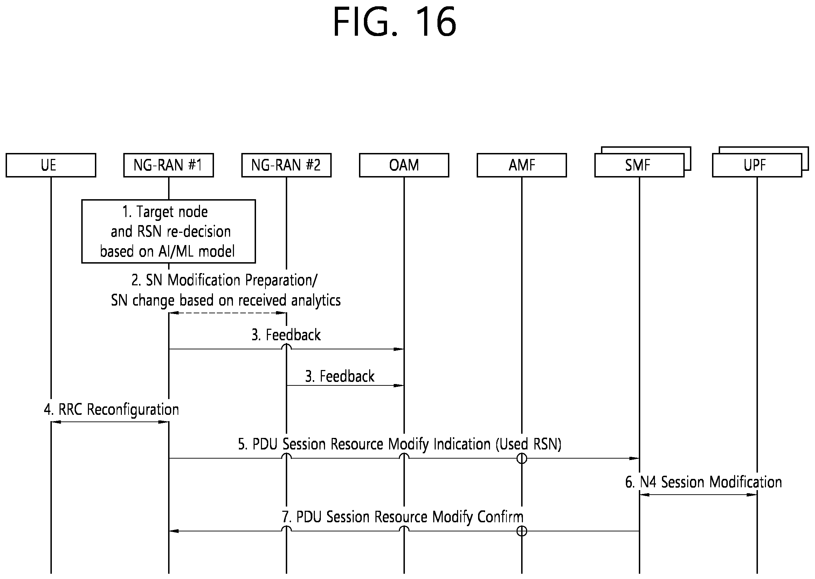

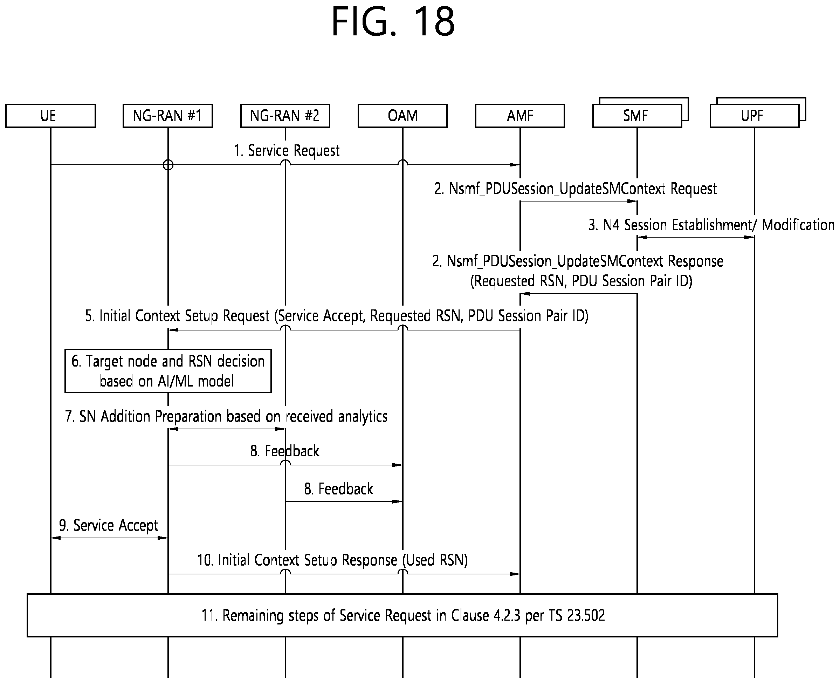

The OAM may refer to the feedback received from NG-RAN #1 and/or NG-RAN #2 when creating a new AI/ML model or updating an existing AI/ML model in Step 3 of the example in FIG. 10. Therefore, the OAM can deliver the improved AI/ML model back to NG-RAN #1. Then, for example, NG-RAN #1 may determine a new Requested RSN value based on the improved AI/ML model when the terminal recreates a PDU Session (with a particular DNN and S-NSSAI combination) related to the redundant transmission through a service request procedure, as shown in the example of FIG. 18. Alternatively, when a PDU Session (of a particular DNN and S-NSSAI combination) is newly created through the PDU Session Establishment procedure, as in the example of FIG. 13 or the example of FIG. 14, NG-RAN #1 may determine a new Requested RSN value based on the improved AI/ML model. Alternatively, through the PDU Session Modification procedure as shown in the example of FIG. 16, NG-RAN #1 may change the RSN value currently assigned/set in the NG-RAN for the PDU Session again based on the improved AI/ML model.

Step 8: NG-RAN #1 can send a PDU Session Establishment Accept message to the terminal. The PDU Session Establishment Accept message may include the resource information allocated/set for the PDU session.

Step 9: NG-RAN #1 informs the SMF of the resource information allocated/set for the PDU Session. If NG-RAN #1 or NG-RAN#2 allocated/set a different RSN value (i.e., Used RSN) instead of the Requested RSN transmitted by the SMF for the PDU Session in Step 5-6, NG-RAN #1 may inform the SMF.

NG-RAN #1 may also forward the RSN statistics/prediction values obtained in Step 5 to the SMF. In this case, the SMF knows that NG-RAN #1 has performed the RSN prediction process based on the AI/ML model. The SMF may also assign RSNs based on that information (e.g., RSN statistics/predicted values) when creating redundant PDU sessions with the same DNN/S-NSSAI combination in the future.

For example, in Steps 5 and 6, NG-RAN #1 or NG-RAN #2 may have selected the RSN that is predicted to have the best performance (e.g., predicted values of packet delay and packet drop rate) or resource status based on the predictions/statistics. In this case, NG-RAN #1 or NG-RAN #2 may transmit this fact to the SMF in the form of a cause value or a new indication.

Step 10: Following the examples in Figures 5 and 6, the remaining steps of the PDU Session Establishment procedure may be performed.

Step 11: The terminal may send a PDU Session Establishment Request message including the DNN and S-NSSAI information to the SMF to further create a second PDU session to be utilized for redundant transmission. Starting with sending the message from the terminal, Steps 1 to 10 of FIG. 13 may be performed. At this time, in the process of calculating the Target node and RSN statistics/prediction values according to Step 5, NG-RAN #1 may use the Used RSN value actually assigned/set by the NG-RAN to create the first Redundant PDU Session as an additional input value of the AI/ML model. For example, NG-RAN #1 may assign a Disjoint UP Path based on the PDU Session related information received from the SMF. In this case, NG-RAN#1 may re-set/assign the RSN value so that the two Redundant PDU Sessions can form a Disjoint UP Path based on the Used RSN value set/assigned by NG-RAN#1 during the creation of the first Redundant PDU Session.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

### FIG. 14 illustrates a procedure according to a fourth example of the disclosure.

The example in Figure 14 shows an example of an end-to-end redundant PDU session establishment procedure based on the analytics of the NG-RAN. In the example of FIG. 14, the OAM may perform AI/ML model training.

FIG. 14 includes an example of an operation in which NG-RAN #1 allocates/sets the node will manage (or serve) a PDU session and RSN based on the AI/ML model received from the OAM in the process of creating a redundant PDU session. The example of FIG. 14 may include an operation different from the example of FIG. 13.

The two PDU sessions for Redundant Transmission can be handled by the same SMF or by two different SMFs. The two PDU sessions for Redundant Transmission can be serviced by the same UPF or by two different UPFs.

NG-RAN #2 may also have its own AI/ML model and may pass the predictions obtained from that AI/ML model to OAM and NG-RAN #1.

In order to avoid the situation where NG-RAN and SMF simultaneously calculate RSN statistical values/predicted values using AI/ML model and NWDAF, NG-RAN may inform AMF that it has the capability to statistically/predict RSN values through AI/ML model. The NG-RAN can send the capability information to the AMF through the NG Setup procedure or NG Configuration Update procedure. Alternatively, the NG-RAN may send capability information to the AMF through procedures such as Registration, Service Request, PDU Session Establishment, etc. The AMF may inform the SMF about the capability of RSN statistics/prediction received from the NG-RAN. The AMF may enable or disable the capability related to the AI/ML model (e.g., the capability of the NG-RAN to perform statistics and/or predictions related to the RSN based on the AI/ML model) for the NG-RAN with the capability. Alternatively, the NG-RAN and the SMF may exchange the capabilities via N2 SM information in a manner that is transparent to the AMF.

To avoid a situation where NG-RAN and SMF simultaneously calculate RSN statistics/prediction values using AI/ML model and NWDAF, the following operation may be performed. For example, based on the analytics obtained from NWDAF, the SMF may perform statistics/predictions on RSNs and assign/set RSNs based on them. In this case, the SMF may transmit the RSN to the NG-RAN via the AMF. The capability information that the SMF can perform these actions (e.g., the SMF assigns/establishes RSNs based on the analytics from the NWDAF) may be transmitted to the NG-RAN via the AMF through the NG Setup or NG Configuration Update procedures, or it may be transmitted to the NG-RAN via the AMF in the middle of the Registration, Service Request, PDU Session Establishment, etc. procedures. Alternatively, the NG-RAN and SMF may exchange the capabilities through N2 SM information so that it is transparent to the AMF.

Step 1: NG-RAN #1 and NG-RAN #2 may predict the RSN value in order to create a redundant PDU session based on a particular S-NSSAI and PDU Session Pair ID combination. For example, NG-RAN #1 and NG-RAN #2 may each perform a process of predicting an RSN value that can be assigned/set by an individual node, based on a procedure as illustrated in the example of FIG. 10. Each NG-RAN may obtain some or all of the following information as a statistical/predictive result, for example
- Predictions/statistics values for RSNs that can be assigned/set for the PDU Session.
- Predictions/statistics value of resource status assigned by RSN for the PDU Session. For example, the predictions/statistics value of the resource status may be an average value or a peak value or a percentage value, etc.
- Performance (e.g., predicted values of packet delay and packet drop rate) based on the predictions/statistics. For example, the value related to performance may be an average value or a peak value or a percentage value.
- confidence and validity time of the prediction/statistic results.
- The area for which the prediction/statistic is valid (e.g., Area of Interest (e.g., list of TAIs or Cell IDs or NG-RAN IDs), etc.)

When using the example procedure of FIG. 14, Step 6 in the example of FIG. 10 may be omitted.

Step 2: NG-RAN #1 and NG-RAN #2 can exchange the results obtained in Step 1 with each other via XnAP messages.

Note that Steps 1 and 2 can also be performed between Steps 3 and 7.

Step 3: The terminal may send a PDU Session Establishment Request message including DNN and S-NSSAI information to the SMF to create a new PDU Session. If the terminal is able to determine the RSN or PDU Session Pair ID based on local configuration or URSP rules within the terminal, the terminal may include that information (e.g., RSN or PDU Session Pair ID) in the PDU Session Establishment Request message.

Step 4: In Step 3, the terminal may not have included the RSN information in the PDU Session Establishment Request message. In this case, the SMF may determine the RSN value for that PDU Session based on information such as the PDU Session Pair ID included in the PDU Session Establishment Request message, the DNN and S-NSSAI related to that PDU Session, and the local configuration within the SMF (if such information was received from the terminal in Step 3). If the terminal has included the RSN information in the PDU Session Establishment Request message in Step 3, the SMF may omit the process of determining the RSN.

In Step 1, the terminal may not have included the PDU Session Pair ID information in the PDU Session Establishment Request message. In this case, the SMF may determine the PDU Session Pair ID value for the the PDU Session based on the DNN and S-NSSAI related to the the PDU Session, the local configuration within the SMF, etc. If the terminal includes the PDU Session Pair ID information in the PDU Session Establishment Request message in Step 3, the operation to determine the PDU Session Pair ID may be omitted.

Step 4: SMF can create an N4 Session for UPF and the PDU Session.

Step 5: The SMF may send a PDU Session Resource Setup Request message to NG-RAN#1. For example, the SMF may send a PDU Session Resource Setup Request to the NG-RAN via AMF to request the NG-RAN to allocate resources for the PDU Session. In addition, the NAS message sent to the terminal, i.e., the PDU Session Establishment Accept message, can also be included in the PDU Session Resource Setup Request message. At this time, the SMF may send a PDU Session Resource Setup Request message to the NG-RAN including the following information:
- The PDU Session Pair ID sent by the terminal in Step 3 for the PDU Session or determined by the SMF in Step 4.
- Requested RSN sent by the terminal in Step 3 or determined by the SMF in Step 4 for the PDU Session

Step 7: NG-RAN #1 can select a target node to assign/set the Disjoint UP path for the PDU Session. For example, by default, NG-RAN #1 may select the target node according to the Requested RSN received from the SMF by utilizing the RSN statistics/prediction values obtained in Steps 1 and 2. In the current example of FIG. 14, NG-RAN #1 has selected NG-RAN #2 as the target node through the procedures of Steps 1 and 2. Therefore, NG-RAN #1 may start the SN Addition procedure towards NG-RAN #2 and request NG-RAN #2 to allocate/set resources based on the information obtained in Step 6. The XnAP SN ADDTION REQUEST message sent by NG-RAN #1 to NG-RAN #2 may include any or all of the following information
- The PDU Session Pair ID received in Step 6.
- Statistics/prediction results obtained in Step 2.
- RSN value related to the PDU Session. For example, the Requested RSN value received by NG-RAN #1 from the SMF in Step 6 or the RSN statistics/prediction value obtained based on the AI/ML model prediction in Steps 1-2.

NG-RAN #1 may decide to take charge of the PDU Session by itself. In this case, NG-RAN #1 may request the gNB-DUs and gNB-CU-UPs located within NG-RAN #1 to allocate/establish resources for the PDU Session without performing the SN Addition procedure. The request message sent by NG-RAN #1 to the gNB-DUs and gNB-CU-UPs may include some or all of the following information:
- The PDU Session Pair ID received in Step 6.
- Statistics/prediction results obtained in Step 2.
- RSN value related to the PDU Session. For example, the Requested RSN value received by NG-RAN #1 from the SMF in Step 6 or the RSN statistics/prediction value obtained based on the AI/ML model prediction in Steps 1-2.

NG-RAN #1 or NG-RAN #2 may not be able to assign/establish a Disjoint UP Path based on the Requested RSN. In this case, NG-RAN #1 or NG-RAN #2 selects the NG-RAN with the RSN value (i.e., Used RSN) that can allocate/establish the Disjoint UP Path (other than the Requested RSN) as the target node. For example, -RAN #1 or NG-RAN #2 may select an NG-RAN with an RSN value other than Request RSN as USed RSN.

Alternatively, NG-RAN #1 may not select the RSN value to which the Disjoint UP Path can be assigned for the Redundant PDU Session, but may select the RSN that is predicted to have the best performance (e.g., predicted values of packet delay and packet drop rate) or the best resource status according to the prediction/statistics results. Then, NG-RAN #1 may select a target node that can provide that RSN.

From this perspective, NG-RAN #1 may select NG-RAN #2, as shown in the example in FIG. 13. In this case, NG-RAN #1 may start the SN Addition procedure in Step 6, and may inform NG-RAN #2 that it has selected the RSN that is predicted to have the best performance (e.g., predicted values of packet delay and packet drop rate) or resource status according to the prediction/statistics results.

Step 8: NG-RAN #2 delivers feedback to the OAM on the results of Step 7 executed based on the statistical/predictive results generated in Step 1. If NG-RAN #1 manages (or handle, or serve)the PDU Session, the feedback may be performed by NG-RAN #1 instead of NG-RAN #2. The feedback sent by NG-RAN #2 may include some or all of the following information
- UE location information (e.g., TAI, Cell ID, NG-RAN ID, etc.);
- Target of Analytics Reporting: a single UE (i.e., an identifier for that terminal (e.g., SUPI, etc.)), or a group of UEs (e.g., an Internal Group ID), or any UE;
- The following information that occurred after NG-RAN #2 manages (or handles, or serves) a PDU Session with a specific S-NSSAI and PDU Session Pair ID combination that was previously managed (or handled, or served) by NG-RAN #1:
- Requested RSN received from the SMF.
- NG-RAN ID actually selected in Step 5 to manage (or handle, or serve) the PDU Session = NG-RAN #2
- Used RSN value assigned/set by the NG-RAN manages (or handles, or serves) the PDU Session
- Current Packet delay and Packet drop rate for the PDU Session
- Current value of resource status assigned for the PDU Session
- QoS information related to the PDU Session

NG-RAN #1 also provides feedback to the OAM on the results of Step 7, which is executed based on the statistics/predictions generated in Step 1. The feedback sent by NG-RAN #1 may include some or all of the following information
- UE location information (e.g., TAI, Cell ID, NG-RAN ID, etc.);
- Target of Analytics Reporting: a single UE (i.e., an identifier for that terminal (e.g., SUPI, etc.)), or a group of UEs (e.g., an Internal Group ID), or any UE;
- Statistics/forecast results obtained in Step 1;
- The following information related to the PDU Session of a specific S-NSSAI and PDU Session Pair ID combination that has not been handed over by NG-RAN #1 to NG-RAN #2 and is still managed (or handled, or served) by NG-RAN #1
- Requested RSN received from the SMF.
- NG-RAN ID actually selected in Step 5 to manage (or handle, or serve) the PDU Session = NG-RAN #1
- Used RSN value assigned/set by the NG-RAN manages (or handles, or serves) the PDU Session
- Current Packet delay and Packet drop rate for the PDU Session
- Current value of resource status assigned for the PDU Session
- QoS information related to the PDU Session

The OAM may refer to the feedback received from NG-RAN #1 and/or NG-RAN #2 when creating a new AI/ML model or updating an existing AI/ML model in Step 3 of the example in FIG. 10. Therefore, the OAM can deliver the improved AI/ML model back to NG-RAN #1. Then, for example, NG-RAN #1 may determine a new Requested RSN value based on the improved AI/ML model when the terminal recreates a PDU Session (with a particular DNN and S-NSSAI combination) related to the redundant transmission through a service request procedure, as shown in the example of FIG. 18. Alternatively, when a PDU Session (of a particular DNN and S-NSSAI combination) is newly created through the PDU Session Establishment procedure, as in the example of FIG. 13 or the example of FIG. 14, NG-RAN #1 may determine a new Requested RSN value based on the improved AI/ML model. Alternatively, through the PDU Session Modification procedure as shown in the example of FIG. 16, NG-RAN #1 may change the RSN value currently assigned/set in the NG-RAN for the PDU Session again based on the improved AI/ML model.

Step 9: NG-RAN #1 can send a PDU Session Establishment Accept message to the terminal. The PDU Session Establishment Accept message may inlcude the resource information allocated/set for the PDU session.

Step 10: NG-RAN #1 notifies the SMF of the resource information allocated/set for the PDU Session. If NG-RAN #1 or NG-RAN#2 allocated/set a different RSN value (i.e., Used RSN) instead of the Requested RSN transmitted by the SMF for the PDU Session in Step 7, it may inform the SMF.

NG-RAN #1 may also forward the RSN statistics/prediction values obtained in Steps 1-2 to the SMF. In this case, the SMF knows that NG-RAN #1 has performed the RSN prediction process based on the AI/ML model. The SMF may also assign RSNs based on that information (e.g., RSN statistics/predicted values) when creating redundant PDU sessions with the same DNN/S-NSSAI combination in the future.

For example, in Step 7, NG-RAN #1 or NG-RAN #2 may have selected the RSN that is predicted to have the best performance (e.g., predicted values of packet delay and packet drop rate) or resource status based on the predictions/statistics. In this case, NG-RAN #1 or NG-RAN #2 may transmit this fact to the SMF in the form of a cause value or a new indication.

Step 11: Following the examples in Figures 5 and 6, the remainder of the PDU Session Establishment procedure may be performed.

Step 12: The terminal may transmit a PDU Session Establishment Request message including the DNN and S-NSSAI information to the SMF to further create a second PDU session to be utilized for redundant transmission. Starting with sending the message from the terminal, Steps 1 to 11 of FIG. 14 may be performed. At this time, in the process of calculating the Target node and RSN statistics/prediction values according to Step 5, NG-RAN #1 may use the Used RSN value actually assigned/set by the NG-RAN to create the first Redundant PDU Session as an additional input value of the AI/ML model. For example, NG-RAN #1 may assign a Disjoint UP Path based on the PDU Session related information received from the SMF. In this case, NG-RAN#1 may re-set/assign the RSN value so that the two Redundant PDU Sessions can form a Disjoint UP Path based on the Used RSN value set/assigned by NG-RAN#1 during the creation of the first Redundant PDU Session.

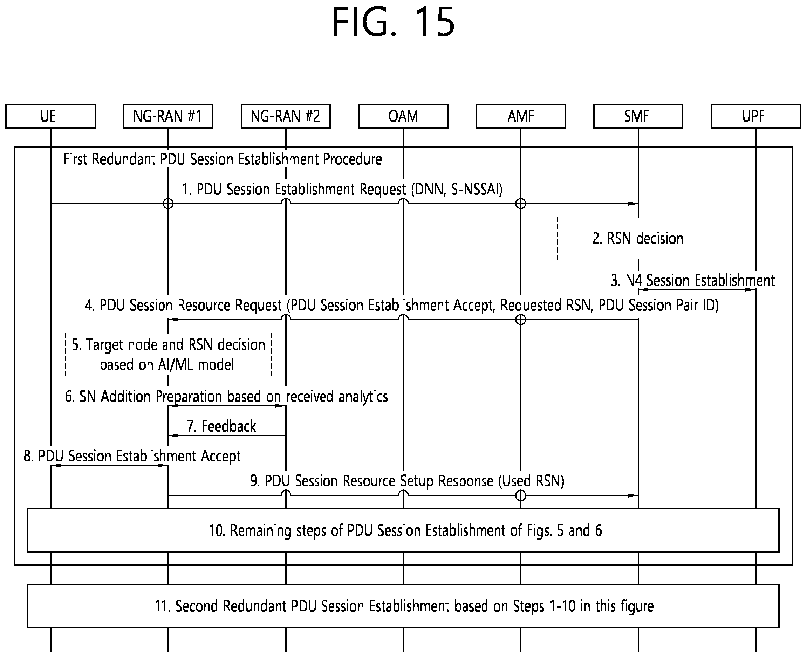

Referring to the example in Figure 15, an example of NG-RAN performing AI/ML model training is described.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

### FIG. 15 illustrates a procedure according to a fifth example of the present disclosure.

FIG. 15 shows an example of an end-to-end redundant PDU session establishment procedure based on the analytics of the NG-RAN. In the example of FIG. 15, the NG-RAN may perform AI/ML model training.

FIG. 15 includes an example of an operation in which NG-RAN #1 allocates/sets a node and RSN to be in charge of the PDU session based on the AI/ML model generated by NG-RAN #1 in the process of creating a redundant PDU session.

The two PDU sessions for Redundant Transmission can be handled by the same SMF or by two different SMFs. The two PDU sessions for Redundant Transmission can be serviced by the same UPF or by two different UPFs.

NG-RAN #2 may also have its own AI/ML model and may pass the predictions obtained from that AI/ML model to OAM and NG-RAN #1.

In order to avoid the situation where NG-RAN and SMF simultaneously calculate RSN statistical values/predicted values using AI/ML model and NWDAF, NG-RAN may inform AMF that it has the capability to statistically/predict RSN values through AI/ML model. The NG-RAN can send the capability information to the AMF through the NG Setup procedure or NG Configuration Update procedure. Alternatively, the NG-RAN may send capability information to the AMF through procedures such as Registration, Service Request, PDU Session Establishment, etc. The AMF may inform the SMF about the capability of RSN statistics/prediction received from the NG-RAN. The AMF may enable or disable the capability for the NG-RAN that has the capability. Alternatively, the NG-RAN and the SMF may exchange the capability via N2 SM information, transparent to the AMF.

To avoid a situation where NG-RAN and SMF simultaneously calculate RSN statistics/prediction values using AI/ML model and NWDAF, the following operation may be performed. For example, based on the analytics obtained from the NWDAF, the SMF may perform statistics/predictions on RSNs and assign/set RSNs based on them. In this case, the SMF may transmit the RSN to the NG-RAN via the AMF. The capability information that the SMF can perform these actions (e.g., the SMF assigns/establishes RSNs based on the analytics from the NWDAF) may be transmitted to the NG-RAN via the AMF through the NG Setup or NG Configuration Update procedures, or it may be transmitted to the NG-RAN via the AMF in the middle of procedures such as Registration, Service Request, PDU Session Establishment, etc. Alternatively, the NG-RAN and the SMF may exchange the capabilities through N2 SM information so that it is transparent to the AMF.

Step 1: The terminal may send a PDU Session Establishment Request message inlcuding DNN and S-NSSAI information to the SMF to create a new PDU Session. If the terminal is able to determine the RSN or PDU Session Pair ID based on local configuration or URSP rules within the terminal, it MAY include that information (e.g., RSN or PDU Session Pair ID) in the PDU Session Establishment Request message.

Steps 2 through 4: This can be done in the same way as steps 2 through 4 in Figure 13.

Step 5: For the Redundant PDU Session creation request received from the SMF, NG-RAN #1 may perform the process of predicting the target node manages (or handles, or serves) the the PDU Session and the RSN value to be assigned/set using the procedure illustrated in FIG. 12. The NG-RAN #1 may select a target node with a high priority to assign/set a disjoint UP path for the PDU Session according to the requested RSN received from the SMF.

NG-RAN #1 may not be able to allocate/establish a Disjoint UP Path based on the Requested RSN. In this case, NG-RAN #1 selects an NG-RAN with an RSN value (other than Requested RSN) (i.e., Used RSN) to which it can assign/establish a Disjoint UP Path as a target node. For example, NG-RAN#1 may select an NG-RAN with an RSN value other than the Request RSN as the USed RSN. In the example of FIG. 15, NG-RAN #1 may select NG-RAN #2 as the target node using the procedure of FIG. 12.

Based on the statistical/predictive results, NG-RAN #1 may decide to manage (or handle, or serve) the PDU session by itself. In this case, when NG-RAN #1 is divided into CU and DU, and CU is further divided into CU-CP and CU-UP, NG-RAN #1 may allocate/set resources for CU-UP and DU according to the Requested RSN value. In this case, if NG-RAN #1 is unable to allocate/establish a disjoint UP path based on the Requested RSN, NG-RAN #1 may select an RSN value (other than the Requested RSN) (i.e., the Used RSN) to allocate/establish a disjoint UP path. For example, NG-RAN#1 may select an RSN value other than the Request RSN as the USed RSN.

Alternatively, NG-RAN #1 may not select the RSN value to which the Disjoint UP Path can be assigned for the Redundant PDU Session, but may select the RSN that is predicted to have the best performance (e.g., predicted values of packet delay and packet drop rate) or resource status according to the prediction/statistics results. Then, NG-RAN #1 may select a target node that can provide that RSN.

From this perspective, NG-RAN #1 may select NG-RAN #2, as shown in the example in Figure 15. In this case, NG-RAN #1 may start the SN Addition procedure in Step 6, informing NG-RAN #2 that it has selected the RSN that is predicted to have the best performance (e.g., predicted values of packet delay and packet drop rate) or resource status according to the prediction/statistics results.

As in Steps 1 and 2 of the example in FIG. 14, NG-RAN #1 and NG-RAN #2 may perform the process of predicting the RSN value that can be assigned/set for a Redundant PDU Session of a particular S-NSSAI and PDU Session Pair ID combination by NG-RAN #1 and NG-RAN #2, respectively. Then, NG-RAN #1 and NG-RAN #2 can exchange RSN values via XnAP messages.

Note that Step 5 can be performed before Step 1 or while Steps 1 through 4 are being performed.

Step 6: Based on the PDU Session Pair ID received in Step 4 and the target node and RSN values determined in Step 5, the NG-RAN may assign/set the Disjoint UP path for the PDU Session. In FIG. 15, since NG-RAN #1 has selected NG-RAN #2 as the target node, NG-RAN #1 may start the SN Addition procedure with NG-RAN #2. When NG-RAN #1 starts the SN Addition procedure, it can request resource allocation/setup based on the information obtained in Steps 4 and 5. The XnAP SN ADDTION REQUEST message sent by NG-RAN #1 to NG-RAN #2 can include some or all of the following information
- PDU Session Pair ID received in Step 4
- Statistics/predicted results obtained in Step 5
- RSN value related to the PDU Session. For example, it can mean the Requested RSN value received from the SMF in Step 4 or the RSN statistics/prediction value obtained based on the AI/ML model prediction in Step 5.

NG-RAN #1 may decide to take charge of the PDU Session by itself. In this case, NG-RAN #1 may request the gNB-DUs and gNB-CU-UPs located within NG-RAN #1 to allocate/establish resources for the PDU Session without performing the SN Addition procedure. The request message sent by NG-RAN #1 to the gNB-DUs and gNB-CU-UPs may include some or all of the following information
- PDU Session Pair ID received in Step 4
- Statistics/predicted results obtained in Step 5
- RSN value related to the PDU Session. For example, it can mean the Requested RSN value received from the SMF in Step 4 or the RSN statistics/prediction value obtained based on the AI/ML model prediction in Step 5.

Step 7: NG-RAN #2 delivers feedback to the OAM on the results of Step 6, which is executed based on the statistical/predictive results generated in Step 5. If NG-RAN #1 manages (or handle, or serve)the PDU Session, the feedback may be omitted. The feedback sent by NG-RAN #2 may include some or all of the following information
- UE location information (e.g., TAI, Cell ID, NG-RAN ID, etc.);
- Target of Analytics Reporting: a single UE (i.e., an identifier for that terminal (e.g., SUPI, etc.)), or a group of UEs (e.g., an Internal Group ID), or any UE;
- The following information that occurred after NG-RAN #2 manages (or handles, or serves) a PDU Session with a specific S-NSSAI and PDU Session Pair ID combination that was previously managed (or handled, or served) by NG-RAN #1:
- Requested RSN received from the SMF.
- NG-RAN ID actually selected in Step 5 to manage (or handle, or serve) the PDU Session = NG-RAN #2
- Used RSN value assigned/set by the NG-RAN manages (or handles, or serves) the PDU session
- Current Packet delay and Packet drop rate for the PDU Session
- Current value of resource status assigned for the PDU Session
- QoS information related to the PDU Session

In Step 3 of the example in FIG. 12, NG-RAN #1 may create a new AI/ML model or update an existing AI/ML model. In this case, NG-RAN #1 may perform the update based on the feedback received from NG-RAN #2. As a result, NG-RAN #1 can re-create an improved AI/ML model.

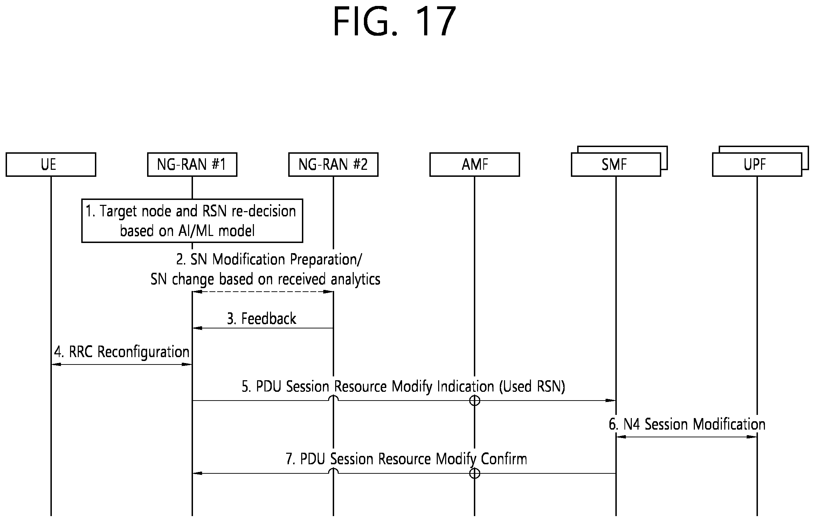

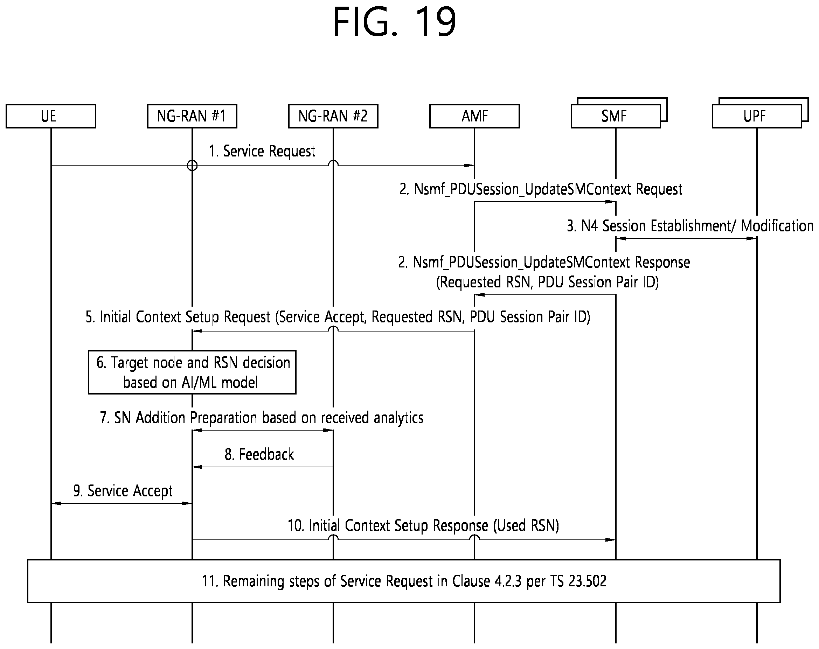

Then, for example, NG-RAN #1 may determine a new Requested RSN value based on the improved AI/ML model when the terminal recreates a PDU Session (of a particular DNN and S-NSSAI combination) related to the redundant transmission via a service request procedure, as in the example of FIG. 19. Alternatively, when a PDU Session (of a particular DNN and S-NSSAI combination) is newly created through the PDU Session Establishment procedure, as in the example of FIG. 15, the NG-RAN #1 may determine the new Requested RSN value based on the improved AI/ML model. Alternatively, through the PDU Session Modification procedure as shown in the example of FIG. 17, the NG-RAN #1 may change the RSN value currently assigned/set by the NG-RAN for the PDU Session again based on the improved AI/ML model.

Steps 8 through 10: This can be performed in the same way as steps 8 through 10 in Figure 13.

Step 11: The terminal may send a PDU Session Establishment Request message including the DNN and S-NSSAI information to the SMF to further create a second PDU session to be utilized for redundant transmission. Starting with sending the message from the terminal, Steps 1 to 10 of the example of FIG. 15 may be performed. At this time, in the process of calculating the Target node and RSN statistics/prediction values according to Step 5, NG-RAN #1 may use the Used RSN value actually assigned/set by the NG-RAN to create the first Redundant PDU Session as an additional input value of the AI/ML model. For example, NG-RAN #1 may assign a Disjoint UP Path based on the PDU Session related information received from the SMF. In this case, NG-RAN#1 may re-set/assign the RSN value so that the two Redundant PDU Sessions can form a Disjoint UP Path based on the Used RSN value set/assigned by NG-RAN#1 during the creation of the first Redundant PDU Session.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

### FIG. 16 illustrates a procedure according to a sixth example of the present disclosure.

FIG. 16 shows an example of an end-to-end redundant PDU session correction procedure based on NG-RAN's analytics. In the example of FIG. 16, the OAM may perform AI/ML model training.

The example in FIG. 16 includes the operation that NG-RAN #1 derives new Target node and RSN statistics/prediction results for the previously created Redundant PDU Session based on the improved AI/ML model received from the OAM. The example of FIG. 16 includes an operation in which NG-RAN #1 assigns/sets a new RSN value based on the statistics/prediction results and notifies the SMF.

NG-RAN #2 may also have its own AI/ML model and may transmit the predictions obtained from that AI/ML model to OAM and NG-RAN #1.

Step 1: As shown in the example of FIG. 10, NG-RAN #1 may receive changed information from the UE, NG-RAN #2, and the OAM. The changed information may be, for example, a change in a value, such as a packet drop rate/packet delay, for a PDU Session of a particular DNN, S-NSSAI combination, as measured by the NG-RAN or UPF, etc. In another example, the changed information may be the results of a redundant PDU Session obtained from another NG-RAN (e.g., the requested RSN and used RSN results for a PDU Session with a specific DNN, S-NSSAI combination, whether the disjoint UP path allocation for that PDU Session succeeded or failed, etc. Based on the changed information, NG-RAN #1 may again perform the operation of determining the Target node to manage (or handle, or serve) the PDU Session for both Redundant PDU Sessions or for one of the Redundant PDU Sessions, and predicting the RSN value to be assigned/set.

As in Steps 1 and 2 of the example in FIG. 14, NG-RAN #1 and NG-RAN #2 may perform the process of predicting the RSN value that can be assigned/set for a Redundant PDU Session of a particular S-NSSAI and PDU Session Pair ID combination by NG-RAN #1 and NG-RAN #2, respectively. Then, NG-RAN #1 and NG-RAN #2 can exchange RSN values via XnAP messages.

Step 2: NG-RAN #1 may perform the SN Modification Preparation or SN Change procedure to change the RSN value that needs to be assigned/set in the Secondary NG-RAN manages (or handles, or serves) the PDU Session based on the statistics/prediction results in Step 1. Alternatively, NG-RAN #1 may execute the SN Modification Preparation or SN Change procedure to change the Secondary NG-RAN manages (or handles, or serves) the PDU Session based on the statistics/prediction results in Step 1.

Alternatively, before Step 2 is performed, based on the statistical/forecast results from Step 1, NG-RAN #1 may request the SMF to change the RSN value for the PDU Session. For this purpose, the NG-RAN #1 may send a PDU Session Resource Notify message to the SMF including the newly assigned/set RSN value. Upon receipt, the SMF may initiate a PDU Session Resource Modification procedure, instructing the NG-RAN #1 to execute the change to the RSN value received from the NG-RAN #1. Upon receiving this, NG-RAN #1 may execute Step 2.

Step 3: NG-RAN #2 delivers feedback to the OAM on the results of Step 2 executed based on the statistical/predictive results generated in Step 1. If NG-RAN #1 manages (or handle, or serve)the PDU Session, the feedback may be performed by NG-RAN #1 instead of NG-RAN #2. The feedback sent by NG-RAN #2 may include some or all of the following information
- UE location information (e.g., TAI, Cell ID, NG-RAN ID, etc.);
- Target of Analytics Reporting: a single UE (i.e., an identifier for that terminal (e.g., SUPI, etc.)), or a group of UEs (e.g., an Internal Group ID), or any UE;
- The following information that occurred after NG-RAN #2 manages (or handles, or serves) a PDU Session with a specific S-NSSAI and PDU Session Pair ID combination that was previously managed (or handled, or served) by NG-RAN #1:
- Requested RSN received from the SMF.
- NG-RAN ID actually selected in Step 1 to manage (or handle, or serve) for the PDU Session = NG-RAN #2
- Used RSN value assigned/set by the NG-RAN manages (or handles, or serves) the PDU Session
- Current Packet delay and Packet drop rate for the PDU Session
- Current value of resource status assigned for the PDU Session
- QoS information related to the PDU Session

NG-RAN #1 also provides feedback to the OAM on the results of Step 2, which is executed based on the statistics/predictions generated in Step 1. The feedback sent by NG-RAN #1 may include some or all of the following information
- UE location information (e.g., TAI, Cell ID, NG-RAN ID, etc.);
- Target of Analytics Reporting: a single UE (i.e., an identifier for that terminal (e.g., SUPI, etc.)), or a group of UEs (e.g., an Internal Group ID), or any UE;
- Statistics/forecast results obtained in Step 1;
- The following information related to the PDU Session of a specific S-NSSAI and PDU Session Pair ID combination that has not been handed over by NG-RAN #1 to NG-RAN #2 and is still managed (or handled, or served) by NG-RAN #1
- Requested RSN received from the SMF.
- NG-RAN ID actually selected in Step 5 to manage (or handle, or serve) the PDU Session = NG-RAN #1
- Used RSN value assigned/set by the NG-RAN manages (or handles, or serves) the PDU Session
- Current Packet delay and Packet drop rate for the PDU Session
- Current value of resource status assigned for the PDU Session
- QoS information related to the PDU Session

The OAM may refer to the feedback received from NG-RAN #1 and/or NG-RAN #2 when creating a new AI/ML model or updating an existing AI/ML model in Step 3 of the example in FIG. 10. Therefore, the OAM can deliver the improved AI/ML model back to NG-RAN #1. Then, for example, NG-RAN #1 may determine a new Requested RSN value based on the improved AI/ML model when the terminal recreates a PDU Session (with a specific DNN and S-NSSAI combination) related to the redundant transmission through a service request procedure, as shown in the example of FIG. 18. Alternatively, when a PDU Session (of a particular DNN and S-NSSAI combination) is newly created through the PDU Session Establishment procedure, as in the example of FIG. 13 or the example of FIG. 14, NG-RAN #1 may determine a new Requested RSN value based on the improved AI/ML model. Alternatively, through the PDU Session Modification procedure as shown in the example of FIG. 16, NG-RAN #1 may change the RSN value currently assigned/set in the NG-RAN for the PDU Session again based on the improved AI/ML model.

Step 4: NG-RAN #1 transmits the resource information allocated/set for the PDU session to the terminal.

If NG-RAN #1 receives a NAS message from the SMF that needs to be forwarded to the terminal, i.e., a PDU Session Modification Command message, NG-RAN #1 forwards it to the terminal.

Step 5: NG-RAN #1 sends a PDU Session Resource Modify Indication message to inform the SMF of the resource information changed for the PDU Session. If the NG-RAN has assigned/set a different RSN value (i.e., Used RSN) for the PDU Session than the RSN value assigned/set during PDU Session Establishment in Steps 1-2, NG-RAN #1 may inform the SMF.

If the SMF sent a PDU Session Resource Modify Request message before Step 2, NG-RAN #1 may send a PDU Session Modify Response message instead of a PDU Session Modify Command message.

Step 6: Each SMF can perform the process of changing the N4 Session for the UPF and the PDU Session.

Step 7: The SMF responds by sending a PDU Session Resource Modify Confirm message to NG-RAN #1. If the SMF sends a PDU Session Resource Modify Request message before step 2, step 7 may be omitted.

Referring to the example in FIG. 17, an example of when NG-RAN performs AI/ML model training is illustrated.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

### FIG. 17 illustrates a procedure according to the seventh example of the present disclosure.

FIG. 17 shows an example of an end-to-end redundant PDU session correction procedure based on NG-RAN's analytics. In the example of FIG. 17, the NG-RAN may perform AI/ML model training.

NG-RAN #2 may also have its own AI/ML model and may pass the predictions obtained from that AI/ML model to OAM and NG-RAN #1.

Step 1: As shown in the example of FIG. 10, NG-RAN #1 may receive changed information from UE, NG-RAN #2. The changed information may be, for example, a changed value of a packet drop rate/packet delay, etc. for a PDU Session of a particular DNN, S-NSSAI combination, as measured by the NG-RAN or UPF, etc. In another example, the changed information may be the results of a redundant PDU Session obtained from another NG-RAN (e.g., the requested RSN and used RSN results for a PDU Session with a specific DNN, S-NSSAI combination, whether the disjoint UP path allocation for that PDU Session succeeded or failed, etc. Based on the changed information, NG-RAN #1 may again perform the operation of determining the target node to manage (or handle, or serve) the PDU Session for both Redundant PDU Sessions or for one of the Redundant PDU Sessions, and predicting the RSN value to be assigned/set.

As in Steps 1 and 2 of the example in FIG. 14, NG-RAN #1 and NG-RAN #2 may perform the process of predicting the RSN value that can be assigned/set for a Redundant PDU Session of a particular S-NSSAI and PDU Session Pair ID combination by NG-RAN #1 and NG-RAN #2, respectively. Then, NG-RAN #1 and NG-RAN #2 can exchange RSN values via XnAP messages.

Step 2: This can be done in the same way as Step 2 in the example in Figure 16.

Step 3: NG-RAN #2 delivers feedback to NG-RAN #1 on the results of Step 2 executed based on the statistics/prediction results generated in Step 1. If NG-RAN #1 manages (or handle, or serve)the PDU Session, the feedback may be omitted. The feedback sent by NG-RAN #2 may include any or all of the following information
- UE location information (e.g., TAI, Cell ID, NG-RAN ID, etc.);
- Target of Analytics Reporting: a single UE (i.e., an identifier for that terminal (e.g., SUPI, etc.)), or a group of UEs (e.g., an Internal Group ID), or any UE;
- The following information that occurred after NG-RAN #2 manages (or handles, or serves) a PDU Session with a specific S-NSSAI and PDU Session Pair ID combination that was previously managed (or handled, or served) by NG-RAN #1:
- Requested RSN received from the SMF.
- NG-RAN ID actually selected in Step 1 to manage (or handle, or serve) the PDU Session = NG-RAN #2
- Used RSN value assigned/set by the NG-RAN manages (or handles, or serves) the PDU Session
- Current Packet delay and Packet drop rate for the PDU Session
- Current value of resource status assigned for the PDU Session
- QoS information related to the PDU Session

NG-RAN #1 may refer to the feedback received from NG-RAN #2 when creating a new AI/ML model or updating an existing AI/ML model in Step 3 of the example in FIG. 12. Therefore, NG-RAN #1 can pass the improved AI/ML model back to NG-RAN #1. Then, for example, NG-RAN #1 may determine a new Requested RSN value based on the improved AI/ML model when the terminal recreates a PDU Session (of a particular DNN and S-NSSAI combination) related to the redundant transmission through a service request procedure, as shown in the example of FIG. 19. Alternatively, when a PDU Session (of a particular DNN and S-NSSAI combination) is newly created through the PDU Session Establishment procedure as illustrated in the example of FIG. 15, NG-RAN #1 may determine a new Requested RSN value based on the improved AI/ML model. Alternatively, through the PDU Session Modification procedure as illustrated in FIG. 17, the NG-RAN #1 may change the RSN value currently assigned/set in the NG-RAN for the PDU Session again based on the improved AI/ML model.

Steps 4 through 7: May be performed in the same manner as steps 4 through 7 of FIG. 16.

In the following, an example of a service request procedure that takes into account the RSN determination based on the analytics of the NG-RAN will be described, with reference to the example of FIG. 18 and the example of FIG. 19.

Referring to the example of FIG. 18, an example of an OAM performing AI/ML model training is described.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

### FIG. 18 illustrates a procedure according to the eighth example of the opening of the present specification.

The example in FIG. 18 illustrates an example of a service request procedure that takes into account the RSN decision based on the NG-RAN's analytics. FIG. 18 includes operations in which the OAM performs AI/ML model training.

The example of FIG. 18 includes an operation in which the NG-RAN assigns/sets a node and RSN to be in charge of the PDU session based on the AI/ML model received from the OAM during the service request process of the terminal.

NG-RAN #2 may also have its own AI/ML model and may pass the predictions obtained from that AI/ML model to OAM and NG-RAN #1.

Step 1: The terminal can send a Service Request message to the AMF over NG-RAN. For example, when the terminal receives a Paging message from the network, or when the terminal has data to send to the network, the terminal may send a Service Request message.

Step 2: The AMF may send the Nsmf_PDUSession_UpdateSMContext Request message to the SMFs related to each PDU Session to recreate the PDU Session related to the terminal.

Step 3: Each SMF can perform actions that create or change the N4 Session for the UPF and the PDU Session.

Step 4: Each SMF sends the N2 SM information to the AMF via the Nsmf_PDUSession_UpdateSMContext Response message to be transmitted to the NG-RAN. At this time, the SMF may include the RSN and PDU Session Pair ID values assigned/set during the PDU Session Establishment process in the Nsmf_PDUSession_UpdateSMContext Response message.

Step 5: The AMF can send the N2 SM information received from the SMF and the Service Accept message to be sent to the terminal to NG-RAN #1.

Step 6: For the Redundant PDU Session creation request received from the SMF, the NG-RAN #1 may perform the process of predicting the target node to be in charge of the the PDU Session and the RSN value to be assigned/set using the procedure of the example in FIG. 10. The NG-RAN #1 may select a target node with a high priority to assign/set a disjoint UP path for the PDU Session based on requested RSN received from the SMF.

NG-RAN #1 may not be able to allocate/establish a Disjoint UP Path based on the Requested RSN. In this case, NG-RAN #1 selects an NG-RAN with an RSN value (other than Requested RSN) (i.e., Used RSN) to which it can assign/establish a Disjoint UP Path as a target node. For example, NG-RAN#1 may select an NG-RAN with an RSN value other than the Request RSN as the USed RSN. In the example of FIG. 18, NG-RAN #1 may select NG-RAN #2 as the target node using the procedure of FIG. 10.

Based on the statistical/predictive results, NG-RAN #1 may decide to manage (or handle, or serve) the PDU session by itself. In this case, when NG-RAN #1 is divided into CU and DU, and CU is further divided into CU-CP and CU-UP, NG-RAN #1 may allocate/set resources for CU-UP and DU according to the Requested RSN value. In this case, if NG-RAN #1 is unable to allocate/establish a disjoint UP path based on the Requested RSN, NG-RAN #1 may select an RSN value (other than the Requested RSN) (i.e., the Used RSN) to allocate/establish a disjoint UP path. For example, NG-RAN#1 may select an RSN value other than the Request RSN as the USed RSN.

Alternatively, NG-RAN #1 may not select the RSN value to which the Disjoint UP Path can be assigned for the Redundant PDU Session, but may select the RSN that is predicted to have the best performance (e.g., predicted values of packet delay and packet drop rate) or the best resource status according to the prediction/statistics results. Then, NG-RAN #1 may select a target node that can provide that RSN.

From this perspective, NG-RAN #1 may select NG-RAN #2, as shown in the example in FIG. 18. In this case, NG-RAN #1 may start the SN Addition procedure in Step 7, informing NG-RAN #2 that it has selected the RSN that is predicted to have the best performance (e.g., predicted values of packet delay and packet drop rate) or resource status based on the predictions/statistics.

As in Steps 1 and 2 of the example in FIG. 14, NG-RAN #1 and NG-RAN #2 may perform the process of predicting the RSN value that can be assigned/set for a Redundant PDU Session of a particular S-NSSAI and PDU Session Pair ID combination by NG-RAN #1 and NG-RAN #2, respectively. Then, NG-RAN #1 and NG-RAN #2 can exchange RSN values via XnAP messages.

Step 6 can be performed before Step 1, or it can be performed while Steps 1 through 5 are being performed.

Step 7: Based on the PDU Session Pair ID received in Step 5 and the target node and RSN values determined in Step 6, the NG-RAN may assign/set the Disjoint UP path for the PDU Session. In the example of FIG. 18, since NG-RAN #1 selects NG-RAN #2 as the target node, NG-RAN #1 may start the SN Addition procedure with NG-RAN #2. While initiating the SN Addition procedure, NG-RAN #1 may request resource allocation/configuration based on the information obtained in Steps 5 and 6. The XnAP SN ADDTION REQUEST message sent by NG-RAN #1 to NG-RAN #2 can include some or all of the following information
- PDU Session Pair ID received in Step 5
- Statistics/prediction results obtained in Step 6
- RSN value related to the PDU Session. For example, it can mean the Requested RSN value received from the SMF in Step 5 or the RSN statistics/prediction value obtained based on the AI/ML model prediction in Step 6.

NG-RAN #1 may decide to take charge of the PDU Session by itself. In this case, NG-RAN #1 may request the gNB-DUs and gNB-CU-UPs located within NG-RAN #1 to allocate/establish resources for the PDU Session without performing the SN Addition procedure. The request message sent by NG-RAN #1 to the gNB-DUs and gNB-CU-UPs may include some or all of the following information
- PDU Session Pair ID received in Step 5
- Statistics/prediction results obtained in Step 6
- RSN value related to the PDU Session. For example, it can mean the Requested RSN value received from the SMF in Step 5 or the RSN statistics/prediction value obtained based on the AI/ML model prediction in Step 6.

Step 8: NG-RAN #2 delivers feedback to the OAM on the results of Step 7 executed based on the statistical/predictive results generated in Step 6. If NG-RAN #1 manages (or handle, or serve)the PDU Session, the feedback may be performed by NG-RAN #1 instead of NG-RAN #2. The feedback sent by NG-RAN #2 may include some or all of the following information
- UE location information (e.g., TAI, Cell ID, NG-RAN ID, etc.);
- Target of Analytics Reporting: a single UE (i.e., an identifier for that terminal (e.g., SUPI, etc.)), or a group of UEs (e.g., an Internal Group ID), or any UE;
- The following information that occurred after NG-RAN #2 manages (or handles, or serves) a PDU Session with a specific S-NSSAI and PDU Session Pair ID combination that was previously the responsibility of NG-RAN #1:
- Requested RSN received from the SMF.
- NG-RAN ID actually selected in Step 5 to manage (or handle, or serve) the PDU Session = NG-RAN #2
- Used RSN value assigned/set by the NG-RAN manages (or handles, or serves) the PDU Session
- Current Packet delay and Packet drop rate for the PDU Session
- Current value of resource status assigned for the PDU Session
- QoS information related to the PDU Session

NG-RAN #1 also provides feedback to the OAM on the results of Step 7, which is executed based on the statistics/predictions generated in Step 6. The feedback sent by NG-RAN #1 may include some or all of the following information
- UE location information (e.g., TAI, Cell ID, NG-RAN ID, etc.);
- Target of Analytics Reporting: a single UE (i.e., an identifier for that terminal (e.g., SUPI, etc.)), or a group of UEs (e.g., an Internal Group ID), or any UE;
- Statistics/forecast results obtained in Step 6;
- the following information related to the PDU Session of the specific S-NSSAI and PDU Session Pair ID combination that has not been handed over by NG-RAN #1 to NG-RAN #2 and is still the responsibility of NG-RAN #1:
- Requested RSN received from the SMF.
- NG-RAN ID actually selected in Step 6 to manage (or handle, or serve) the PDU Session = NG-RAN #1
- Used RSN value assigned/set by the NG-RAN manages (or handles, or serves) the PDU Session
- Current Packet delay and Packet drop rate for the PDU Session
- Current value of resource status assigned for the PDU Session
- QoS information related to the PDU Session

The OAM may refer to the feedback received from NG-RAN #1 and/or NG-RAN #2 when creating a new AI/ML model or updating an existing AI/ML model in Step 3 of the example in FIG. 10. Therefore, the OAM can deliver the improved AI/ML model back to NG-RAN #1. Then, for example, NG-RAN #1 may determine a new Requested RSN value based on the improved AI/ML model when the terminal recreates a PDU Session (with a particular DNN and S-NSSAI combination) related to the redundant transmission through a service request procedure, as shown in the example of FIG. 18. Alternatively, when a PDU Session (of a particular DNN and S-NSSAI combination) is newly created through the PDU Session Establishment procedure, as in the example of FIG. 13 or the example of FIG. 14, NG-RAN #1 may determine a new Requested RSN value based on the improved AI/ML model. Alternatively, through the PDU Session Modification procedure as shown in the example of FIG. 16, NG-RAN #1 may change the RSN value currently assigned/set in the NG-RAN for the PDU Session again based on the improved AI/ML model.

Step 9: NG-RAN #1 may send a Service Accept message to the terminal including the resource information allocated/set for the PDU session.

Step 10: NG-RAN #1 informs the SMF of the resource information allocated/set for the PDU Session. If NG-RAN #1 or NG-RAN#2 allocated/set a different RSN value (i.e., Used RSN) instead of the Requested RSN transmitted by the SMF for the PDU Session in Step 6~7, NG-RAN #1 may inform the SMF.

NG-RAN #1 may also forward the RSN statistics/prediction values obtained in Step 6 to the SMF. In this case, the SMF can know that NG-RAN #1 has performed the RSN prediction process based on the AI/ML model. The SMF may also assign RSNs based on such information (e.g., RSN statistics/predicted values) when creating redundant PDU sessions with the same DNN/S-NSSAI combination in the future.

For example, in Steps 6-7, NG-RAN #1 or NG-RAN #2 may have selected the RSN that is predicted to have the best performance (e.g., predicted values of packet delay and packet drop rate) or resource status based on the predictions/statistics. In this case, NG-RAN #1 or NG-RAN #2 may transmit this fact to the SMF in the form of a cause value or a new indication.

Step 11: The remaining steps of the Service Request procedure are performed according to Clause 4.2.3 of TS 23.502 V17.5.0.

Referring to the example in FIG. 19, an example of NG-RAN performing AI/ML model training is described.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

### FIG. 19 illustrates a procedure according to the ninth example of the opening of this specification.

The example in FIG. 19 illustrates an example of a service request procedure that takes into account the RSN decision based on the NG-RAN's analytics. FIG. 19 includes operations in which the NG-RAN performs AI/ML model training.

The example of FIG. 19 includes an operation in which the NG-RAN allocates/sets the node and RSN to be in charge of the PDU session based on the AI/ML model during the service request process of the terminal.

NG-RAN #2 may also have its own AI/ML model and may pass the predictions obtained from that AI/ML model to OAM and NG-RAN #1.

Step 1: The terminal can send a Service Request message to the AMF over NG-RAN. For example, when the terminal receives a Paging message from the network, or when the terminal has data to send to the network, the terminal may send a Service Request message.

Step 2: The AMF may send the Nsmf_PDUSession_UpdateSMContext Request message to the SMFs related to each PDU Session to recreate the PDU Session related to the terminal.

Step 3: Each SMF can perform operations that create or change the N4 Session for the UPF and the PDU Session.

Step 4: Each SMF sends the N2 SM information to the AMF via the Nsmf_PDUSession_UpdateSMContext Response message that it transmits to the NG-RAN. At this time, the SMF may include the RSN and PDU Session Pair ID values assigned/set during the PDU Session Establishment process in the Nsmf_PDUSession_UpdateSMContext Response message.

Step 5: The AMF can send the N2 SM information received from the SMF and the Service Accept message to be sent to the terminal to NG-RAN #1.

Step 6: For the Redundant PDU Session creation request received from the SMF, NG-RAN #1 may perform the process of predicting the target node to be in charge of the the PDU Session and the RSN value to be assigned/set using the example procedure of FIG. 12. The NG-RAN #1 may select a target node with a high priority to assign/set a disjoint UP path for the PDU Session according to the requested RSN received from the SMF.

NG-RAN #1 may not be able to allocate/establish a Disjoint UP Path based on the Requested RSN. In this case, NG-RAN #1 selects an NG-RAN with an RSN value (other than Requested RSN) (i.e., Used RSN) to which it can assign/establish a Disjoint UP Path as a target node. For example, NG-RAN#1 may select an NG-RAN with an RSN value other than the Request RSN as the USed RSN. In the example of FIG. 19, NG-RAN #1 may select NG-RAN #2 as the target node using the procedure of the example of FIG. 12.

Based on the statistical/predictive results, NG-RAN #1 may decide to manage (or handle, or serve) the PDU session by itself. In this case, when NG-RAN #1 is divided into CU and DU, and CU is further divided into CU-CP and CU-UP, NG-RAN #1 may allocate/set resources for CU-UP and DU according to the Requested RSN value. In this case, if NG-RAN #1 is not able to allocate/establish a disjoint UP path based on the Requested RSN, NG-RAN #1 may select an RSN value (other than the Requested RSN) (i.e., the Used RSN) to allocate/establish a disjoint UP path. For example, NG-RAN#1 may select an RSN value other than the Request RSN as the USed RSN.

Alternatively, NG-RAN #1 may not select the RSN value to which the Disjoint UP Path can be assigned for the Redundant PDU Session, but may select the RSN that is predicted to have the best performance (e.g., predicted values of packet delay and packet drop rate) or resource status according to the prediction/statistics results. Then, NG-RAN #1 may select a target node that can provide that RSN.

From this perspective, NG-RAN #1 may select NG-RAN #2, as shown in the example in FIG. 19. In this case, NG-RAN #1 may start the SN Addition procedure in Step 7 and inform NG-RAN #2 that it has selected the RSN that is predicted to have the best performance (e.g., predicted values of packet delay and packet drop rate) or resource status according to the prediction/statistics results.

As in Steps 1 and 2 of the example in FIG. 14, NG-RAN #1 and NG-RAN #2 may perform the process of predicting the RSN value that can be assigned/set for a Redundant PDU Session of a particular S-NSSAI and PDU Session Pair ID combination by NG-RAN #1 and NG-RAN #2, respectively. Then, NG-RAN #1 and NG-RAN #2 can exchange RSN values via XnAP messages.

Step 6 can be performed before Step 1, or it can be performed while Steps 1 through 5 are being performed.

Step 7: Based on the PDU Session Pair ID received in Step 5 and the target node and RSN values determined in Step 6, the NG-RAN may assign/set the Disjoint UP path for the PDU Session. In the example of FIG. 19, since NG-RAN #1 selects NG-RAN #2 as the target node, NG-RAN #1 can start the SN Addition procedure with NG-RAN #2. While initiating the SN Addition procedure, NG-RAN #1 may request resource allocation/configuration based on the information obtained in Steps 5 and 6. The XnAP SN ADDTION REQUEST message sent by NG-RAN #1 to NG-RAN #2 can include some or all of the following information
- PDU Session Pair ID received in Step 5
- Statistics/prediction results obtained in Step 6
- RSN value related to the PDU Session. For example, it can mean the Requested RSN value received from the SMF in Step 5 or the RSN statistics/prediction value obtained based on the AI/ML model prediction in Step 6.

NG-RAN #1 may decide to take charge of the PDU Session by itself. In this case, NG-RAN #1 may request the gNB-DUs and gNB-CU-UPs located within NG-RAN #1 to allocate/establish resources for the PDU Session without performing the SN Addition procedure. The request message sent by NG-RAN #1 to the gNB-DUs and gNB-CU-UPs may include some or all of the following information
- PDU Session Pair ID received in Step 5
- Statistics/prediction results obtained in Step 6
- RSN value related to the PDU Session. For example, it can mean the Requested RSN value received from the SMF in Step 5 or the RSN statistics/prediction value obtained based on the AI/ML model prediction in Step 6.

Step 8: NG-RAN #2 delivers feedback to NG-RAN #1 on the results of Step 7, which is executed based on the statistical/predictive results generated in Step 6. If NG-RAN #1 manages (or handle, or serve)the PDU Session, the feedback may be omitted. The feedback sent by NG-RAN #2 may include some or all of the following information
- UE location information (e.g., TAI, Cell ID, NG-RAN ID, etc.);
- Target of Analytics Reporting: a single UE (i.e., an identifier for that terminal (e.g., SUPI, etc.)), or a group of UEs (e.g., an Internal Group ID), or any UE;
- The following information that occurred after NG-RAN #2 manages (or handles, or serves) a PDU Session with a specific S-NSSAI and PDU Session Pair ID combination that was previously the responsibility of NG-RAN #1:
- Requested RSN received from the SMF.
- NG-RAN ID actually selected in Step 5 to manage (or handle, or serve) the PDU Session = NG-RAN #2
- Used RSN value assigned/set by the NG-RAN responsible for the PDU Session
- Current Packet delay and Packet drop rate for the PDU Session
- Current value of resource status assigned for the PDU Session
- QoS information related to the PDU Session

In Step 3 of the example in FIG. 12, NG-RAN #1 may create a new AI/ML model or update an existing AI/ML model. In this case, NG-RAN #1 may perform the update based on the feedback received from NG-RAN #2. As a result, NG-RAN #1 can re-create an improved AI/ML model.

Then, for example, NG-RAN #1 may determine a new Requested RSN value based on the improved AI/ML model when the terminal recreates a PDU Session (of a particular DNN and S-NSSAI combination) related to the redundant transmission via a service request procedure, as in the example of FIG. 19. Alternatively, when a PDU Session (of a particular DNN and S-NSSAI combination) is newly created through the PDU Session Establishment procedure, as in the example of FIG. 15, the NG-RAN #1 may determine the new Requested RSN value based on the improved AI/ML model. Alternatively, through the PDU Session Modification procedure as shown in the example of FIG. 17, the NG-RAN #1 may change the RSN value currently assigned/set by the NG-RAN for the PDU Session again based on the improved AI/ML model.

Step 9: NG-RAN #1 may send a Service Accept message to the terminal including the resource information allocated/set for the PDU session.

Step 10: NG-RAN #1 notifies the SMF of the resource information allocated/set for the PDU Session. If NG-RAN #1 or NG-RAN#2 allocated/set a different RSN value (i.e., Used RSN) instead of the Requested RSN transmitted by the SMF for the PDU Session in Step 6~7, NG-RAN #1 may inform the SMF.

NG-RAN #1 may also forward the RSN statistics/prediction values obtained in Step 6 to the SMF. In this case, the SMF can know that NG-RAN #1 has performed the RSN prediction process based on the AI/ML model. The SMF may also assign RSNs based on such information (e.g., RSN statistics/predicted values) when creating redundant PDU sessions with the same DNN/S-NSSAI combination in the future.

For example, in Steps 6-7, NG-RAN #1 or NG-RAN #2 may have selected the RSN that is predicted to have the best performance (e.g., predicted values of packet delay and packet drop rate) or resource status based on the predictions/statistics. In this case, NG-RAN #1 or NG-RAN #2 may transmit this fact to the SMF in the form of a cause value or a new indication.

Step 11: The remaining steps of the Service Request procedure are performed according to Clause 4.2.3 of TS 23.502 V17.5.0.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

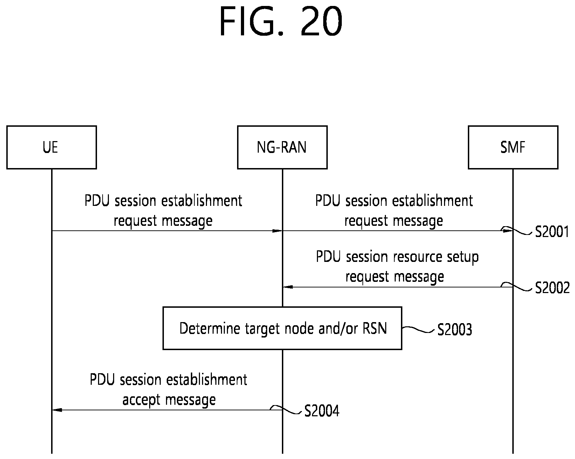

### FIG. 20 illustrates an example of a procedure according to one embodiment of the disclosure.

Note that the procedure illustrated in FIG. 20 is illustrative only, and the scope of the present disclosure is not limited by the example of FIG. 20. For example, the UE, NG-RAN, and SMF illustrated in FIG. 20 may perform the operations described in the example of FIG. 8 or the example of FIG. 19. Of note, the AMF, UPF, and OAM are not shown in the examples of FIG. 20, but this is for illustrative purposes only, i.e., the AMF, UPF, and OAM can perform the operations described in the various examples of the disclosure even in embodiments based on FIG. 20.

For example, for the example of FIG. 20, the operations described in the examples of FIGS. 8 through 19 may also be applied. For example, any operation, content, etc. described in the various examples of the disclosure may be applied, even if the operation, content, etc. is not directly described in the example of FIG. 20.

In step S2001, the UE may transmit a PDU session establishment request message to the NG-RAN, and the NG-RAN may transmit a PDU session establishment request message to the SMF. The PDU session establishment request message may include a DNN and an S-NSSAI.

The UE may also determine the RSN value and/or PDU session pair ID based on local configuration or UE Route Selection Policy (URSP) rules. In this case, the PDU session establishment request message may further include the RSN value and/or the PDU session pair ID.

In step S2002, the SMF may send a PDU session resource establishment request message to the NG-RAN. The PDU session resource establishment request message may include a PDU session establishment acceptance message.

The PDU session resource establishment request message may include the requested RSN, the PDU session pair ID, and the requested RSN.

In step S2003, the NG-RAN may determine a target node and/or RSN. For example, the NG-RAN may perform model inference based on an AI/ML model. For example, the NG-RAN may determine, based on the AI/ML model, target nodes and/or RSNs for PDU sessions related to redundant transmissions.

A target node may refer to a target node that is responsible for (or serving) a PDU session for redundant transmission, for example. The target node may be determined to be the NG-RAN or another NG-RAN. The NG-RAN may, for example, determine as the target node a first NG-RAN to which the UP path may be disjointly assigned based on the determined RSN. If the target node is a NG-RAN other than the NG-RAN, the NG-RAN may transmit an XnAP SN ADDTION REQUEST message comprising a PDU session pair ID and the determined RSN value to the target node.

For example, the NG-RAN may determine the determined RSN to be a different RSN than the requested RSN if it is not possible to assign a disjoint UP path based on the requested RSN.

If the target node is an NG-RAN, the NG-RAN may send a message requesting resource allocation for the PDU session, to the gNB-DUs and/or gNB-CU-UPs included in the NG-RAN. Here, the message requesting resource allocation may include the PDU session pair ID and the determined RSN value.

Then, based on the determined RSN value and PDU session pair ID, the NG-RAN may perform actions to assign the UP path. The NG-RAN may disjointly assign UP paths.

When the AI/ML model is provided by the OAM, the NG-RAN may provide feedback information about the AI/ML model to the OAM. For example, the NG-RAN may send feedback information that includes information related to step S2003, to the OAM. And, the NG-RAN may receive information from the OAM regarding the updated AI/ML model.

The NG-RAN may include a list of candidate NG-RANs that may manage (or handle, or serve) the PDU session, a prediction of RSN values to be assigned to the NG-RANs included in the list of candidate NG-RANs, a prediction of resource status for the RSN values to be assigned, and a performance prediction for the RSN values to be assigned. The performance prediction may include a prediction related to a packet delay and/or a prediction related to a packet drop rate. The NG-RAN may determine the RSN based on the resource state prediction and/or the performance prediction.

In step S2004, the NG-RAN may send a PDU session establishment accept message to the UE. The PDU session establishment acceptance message may include resource information established for the PDU session.

The NG-RAN may also send a PDU session resource establishment response message to the SMF including the determined RSN value as the used RSN.

The technical features described herein that are individually described within a single drawing may be implemented separately or simultaneously.

According to one embodiment of the disclosure, the NG-RAN may generate a disjoint UP Path for a PDU Session for redundant transmission. For this purpose, the NG-RAN may select an RSN based on an AI/ML model. For example, the NG-RAN may request an improved AI/ML model from the OAM for RSN statistics/prediction. For example, the OAM may obtain information from the terminal, neighboring NG-RANs, such as the location of the terminal, DNN and S-NSSAI of the PDU Session, service area of the SMF, etc. Based on this information, the OAM may update the AI/ML model. The OAM can deliver the updated AI/ML model to the NG-RAN. Based on the AI/ML model update obtained from the OAM, the NG-RAN may calculate RSN statistics/prediction values for the Redundant PDU Session. For example, the NG-RAN may allocate/set a Disjoint UP Path for the PDU Session based on the RSN statistics/predicted value.

According to various examples of the disclosure, the disclosure may have various effects. For example, based on RSN statistics/predicted values obtained from an AI/ML model configured by an OAM or an AI/ML model configured by the NG-RAN itself, a Disjoint UP Path may be guaranteed. For example, based on the RSN statistics/predicted values, the NG-RAN may appropriately set the RSN for the Redundant PDU Session. Therefore, the NG-RAN may guarantee a Disjoint UP Path for the PDU Session.

The effects that can be achieved by the specific examples in this specification are not limited to those listed above. For example, a disjoint UP Path may be effectively allocated for PDU sessions for redundant transmission. For example, by ensuring a disjoint UP Path, a high reliability of the communication service may be ensured. There are various other technical effects that may be understood or inferred from the present disclosure by a person having ordinary skill in the related art, for example. Accordingly, the specific effects of the present disclosure are not limited to those expressly described herein, but may include various effects that may be understood or induced from the technical features of the present disclosure.

For reference, the operation of the terminal (e.g., UE) described in the present specification may be implemented by the apparatus of FIGS. 1 to 4 described above. For example, the terminal (e.g., UE) may be the first device 100 or the second device 200 of FIG. 2. For example, an operation of a terminal (e.g., UE) described herein may be processed by one or more processors 102 or 202 . The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal (e.g., UE) described herein by executing instructions/programs stored in one or more memories 104 or 204.

In addition, instructions for performing an operation of a terminal (e.g., UE) described in the present disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE) described in the present disclosure of the present specification.

For reference, the operation of a network node (e.g., AMF, SMF, UPF, PCF, EASDF, UDM, PCF, NEF, PCF/NEF , AF, UDR, DN, OAM NWDAF, etc.) or base station (e.g., (R)AN, NG-RAN, gNB, etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for performing communication, the method performed by a Next Generation Radio Access Network (NG-RAN) and comprising:
receiving a Packet Data Unit (PDU) session establishment request message from a User Equipment (UE);
transmitting the PDU session establishment request message to a Session Management Function (SMF);
receiving a PDU session resource setup request message including a requested Redundancy Sequence Number (RSN) and a PDU session pair ID from the SMF;
determining a target node and an RSN for the PDU session related to a redundant transmission, based on an artificial intelligence/machine learning (AI/ML) model; and
allocating a User Plane (UP) path, based on the determined RSN value and the PDU session pair ID.

2. The method of claim 1,
wherein the PDU session resource setup request message inlcudes a PDU session establishment accept message,
the method further comprising:
transmitting the PDU session establishment accept message to the UE.

3. The method of claim 1 or 2, further comprising:
transmitting to the SMF a PDU session resource setup response message including the determined RSN value as the used RSN.

4. The method of any one of claims 1 to 3,
wherein a first NG-RAN to which the UP path can be disjointly allocated is determined to be the target node, based on the determined RSN,.

5. The method of any one of claims 1 to 4,
wherein the determined RSN is determined to be a different RSN than the requested RSN, based on that a disjoint UP path is cannot be assinged based on the requested RSN, the.

6. The method of any one of claims 1 to 5,
wherein the allocating comprising:
transmitting an XnAP SN ADDITION REQUEST message including the PDU session pair ID and the determined RSN value to the target node, based on that the target node is different from the NG-RAN .

7. The method of any one of claims 1 to 5,
wherein the allocating comprising:
transmitting a message requesting resource allocation for the PDU session, to gNB-DUs and/or gNB-CU-UPs included in the NG-RAN, based on that wherein the target node is the NG-RAN,
wherein the message requesting resource allocation includes a PDU session pair ID and a determined RSN value.

8. The method of any one of claims 1 to 7, further comprising:
transmitting feedback information including information related to the determining to the OAM; and
receiving information related to an updated AI/ML model from the OAM.

9. The method of any one of claims 1 to 8,
wherein the determining further comprising:
predicting a list of candidate NG-RANs that may manage the PDU session, prediction values for RSN values to be assigned for NG-RANs included in the list of candidate NG-RANs, prediction values for resource status for the RSN values to be assigned, and performance prediction value for the RSN values to be assigned.

10. The method of claim 9,
wherein the performance prediction value includes a prediction value related to a packet delay and/or a prediction value related to a packet drop rate.

11. The method of any one of claims 9 or 10,
wherein the RSN is determined based on the predicted value of resource status and/or the performance prediction value.

12. A Next Generation Radio Access Network (NG-RAN) for performing communications, the NG-RAN comprising:
one or more transceivers;
one or more processors; and
one or more computer memory operably connectable to the one or more processor and storing instructions that, based on being executed by the at least one processor, the one or more processors adapted to perform operations comprising the method of any one of claims 1 to 11.

13. A method for performing communication, the method performe by a user equipment (UE), the method comprising:
transmitting a PDU session establishment request message for requesting establishment of a Packet Data Unit (PDU) session for redundant transmission to a Next Generation Radio Access Network (NG-RAN),
wherein the PDU session establishment request message includes a Data Network Name (DNN) and Single Network Slice Selection Assistance Information (S-NSSAI); and
wherein the PDU session establishment request message is used by the SMF to transmit a PDU session resource setup request message including a requested Redundancy Sequence Number (RSN) and a PDU session pair ID to the NG-RAN; and
receiving a PDU session establishment accept message including resource information configured for the PDU session,
wherien the resource information is based on a disjoint User Plane (UP) path for the PDU session.

14. The method of claim 13,
wherein the PDU session establishment request message further inlcudes an RSN value and/or a PDU session pair ID.

15. The method of claim 13 or 14, further comprising:
determining the RSN value and/or the PDU session pair ID based on the UE's local configuration or UE Route Selection Policy (URSP) rules.

16. A User Equipment (UE) for performing communications, the UE comprising:
one or more transceivers;
one or more processors; and
one or more computer memory operably connectable to the one or more processor and storing instructions that, based on being executed by the at least one processor, the one or more processors adapted to perform operations comprising the method of any one of claims 13 to 15.

17. An apparatus in mobile communication comprising:
one or more transceivers;
one or more processors; and
one or more computer memory operably connectable to the one or more processor and storing instructions that, based on being executed by the at least one processor, the one or more processors adapted to perform operations comprising the method of any one of claims 13 to 15.

18. A non-transitory Computer Readable Medium (CRM) storing instructions that, based on being executed by at least one processor, perform the method of any claims 13 to 15.
